# EUROPEAN PATENT APPLICATION

(11) **EP 4 722 882 A1**
(43) Date of publication of application: **08.04.2026**
(21) Application number: 24832456.8
(22) Date of filing: 27.06.2024
(51) Int. Cl.: G06F 3/04883, G06Q 20/32, G06Q 20/40, G06Q 20/14, G06F 3/041, G06F 1/16, G06F 3/00, G06F 3/0484

(54) **ELECTRONIC DEVICE AND GESTURE-BASED PAYMENT METHOD USING SAME**

(30) Priority: 27.06.2023 KR 20230082363; 20.07.2023 KR 20230094916
(71) Applicant: Samsung Electronics Co., Ltd., Suwon-si, Gyeonggi-do 16677 (KR)
(72) Inventor: KIM, Namin, Suwon-si, Gyeonggi-do 16677 (KR); LEE, Eunbin, Suwon-si, Gyeonggi-do 16677 (KR); LIM, Yeunwook, Suwon-si, Gyeonggi-do 16677 (KR); HAN, Heelim, Suwon-si, Gyeonggi-do 16677 (KR); HEO, Jungah, Suwon-si, Gyeonggi-do 16677 (KR); GIM, Eunsil, Suwon-si, Gyeonggi-do 16677 (KR); HEO, Sangman, Suwon-si, Gyeonggi-do 16677 (KR); HEO, Seunghyuck, Suwon-si, Gyeonggi-do 16677 (KR)
(74) Representative: HGF
(86) International application number: PCT/KR2024/008951
(87) International publication number: WO 2025/005678

(57) **Abstract**

Disclosed is an electronic device which includes a housing, a first flexible display, a second display, at least one camera, a memory, and at least one processor. The at least one processor detects a touch input for a first area of the second display in the folded position, displays, when a movement of the touch input from the first area is detected, a first image indicating a payment means on at least a part of the first area and a second image on at least a part of a second area of the second display, and executes, when a movement of the touch input to the second area is detected, a payment service based on the payment means using the at least one camera.

## Description

### [Technical Field]

The disclosure relates to an electronic device and a gesture-based payment method using the electronic device.

### [Background Art]

An electronic device, such as a smartphone, provides several convenient and useful functions via various applications. For example, a user may perform payment for goods using a payment application installed in the smartphone. In general, the user may take out his or her smartphone, when he or she purchases an item in a store, may switch the screen to an ON state to release a lock screen, may execute the payment application, and may capture a quick response (QR) code of the store or may transmit a signal in a near field communication (NFC) scheme and/or a magnetic secure transmission (MST) scheme, thus performing payment for goods.

### [Disclosure]

### [Technical Solution]

An electronic device according to an embodiment may include: a housing including a first housing and a second housing configured to movably engage with the first housing between a folded position and an unfolded position, a first flexible display visible from a front side of the housing in the unfolded position, a second display visible from a rear side of the housing in the unfolded position and located in the second housing, at least one camera visible from the rear side of the housing in the unfolded position and located in the second housing, a memory, and at least one processor electrically connected to the first flexible display, the second display, the at least one camera, and the memory, wherein at least one processor may be configured to detect a touch input for a first area of the second display in the folded position, display, when a movement of the touch input from the first area is detected, a first image indicating a payment means on at least a part of the first area and a second image on at least a part of a second area of the second display, and execute, when a movement of the touch input to the second area is detected, a payment service based on the payment means using the at least one camera.

A method of an electronic device according to an embodiment may include detecting a touch input to a first area of a second display visible from the outside in a folded position of the electronic device or a movement of the touch input from the first area, displaying a first image indicating a payment means on at least a part of the first area and displaying a second image on at least a part of a second area of the second display, and executing, when a movement of the touch input to the second area is detected, a payment service based on the payment means using at least one camera.

An electronic device according to an embodiment may include: a housing including a first housing part and a second housing part configured to movably engage with the first housing part between a folded position and an unfolded position, a first flexible display visible from a front side of the housing in the unfolded position, a second display visible from a rear side of the housing in the unfolded position and located in the second housing part, at least one camera visible from the rear side of the housing in the unfolded position and located in the second housing part, a memory, and at least one processor electrically connected to the first flexible display, the second display, the at least one camera, and the memory, wherein at least one processor may be configured to detect a touch input to a first area of the second display in the folded position, display, when a movement of the touch input from the first area is detected, a part of a first image indicating a payment means on at least a part of the first area, and display entirety of the first image as a movement distance of the touch input within the first area being increased.

### [Description of Drawings]

FIG. 1A is a drawing illustrating an unfolded position of an electronic device according to an embodiment;
FIG. 1B is a drawing illustrating a half-folded position of an electronic device according to an embodiment;
FIG. 1C is a drawing illustrating a folded position of an electronic device according to an embodiment;
FIG. 2 is a block diagram illustrating a configuration of an electronic device according to an embodiment;
FIG. 3 illustrates areas of a second display of an electronic device according to an embodiment;
FIG. 4A illustrates a user interface for executing a payment service using a camera, in a folded position of an electronic device according to an embodiment;
FIG. 4B illustrates a user interface for executing a payment service using a camera, in a half-folded position of an electronic device according to an embodiment;
FIG. 5 illustrates a user interface for executing a payment service using a second display, in a folded position of an electronic device according to an embodiment;
FIG. 6 illustrates a user interface for executing a payment service based on entering authentication information, in a folded position of an electronic device according to an embodiment;
FIG. 7 illustrates a user interface for executing a payment service using fingerprint authentication, in a folded position of an electronic device according to an embodiment;
FIG. 8 illustrates a user interface for executing a payment service using pattern authentication, in a folded position of an electronic device according to an embodiment;
FIG. 9A illustrates a user interface for selecting a payment means used for a payment service, in a folded position of an electronic device according to an embodiment;
FIG. 9B illustrates a user interface for setting a selected payment means in a pre-defined area, in a folded position of an electronic device according to an embodiment;
FIG. 10 illustrates a user interface for executing a payment service using online payment authentication, in a folded position of an electronic device according to an embodiment;
FIG. 11 is a flowchart illustrating an operation of an electronic device according to an embodiment;
FIG. 12 is a flowchart illustrating an operation addable after operation 1110 of FIG. 11;
FIG. 13 is a flowchart illustrating an operation addable after operation 1203 of FIG. 12;
FIG. 14 is a flowchart illustrating an operation of an electronic device according to an embodiment;
FIG. 15 illustrates a user interface for displaying a payment means in response to a touch input, in a folded position of an electronic device according to an embodiment;
FIG. 16 illustrates a user interface for displaying a payment means in response to a touch input, in a folded position of an electronic device according to an embodiment; and
FIG. 17 is a block diagram of an electronic device in a network environment according to an embodiment.

With regard to description of drawings, the same or similar components will be marked by the same or similar reference signs.

### [Mode for Invention]

Hereinafter, various embodiments of the disclosure may be described with reference to accompanying drawings. However, it should be understood that this is not intended to limit the disclosure to specific implementation forms and includes various modifications, equivalents, and/or alternatives of embodiments of the disclosure.

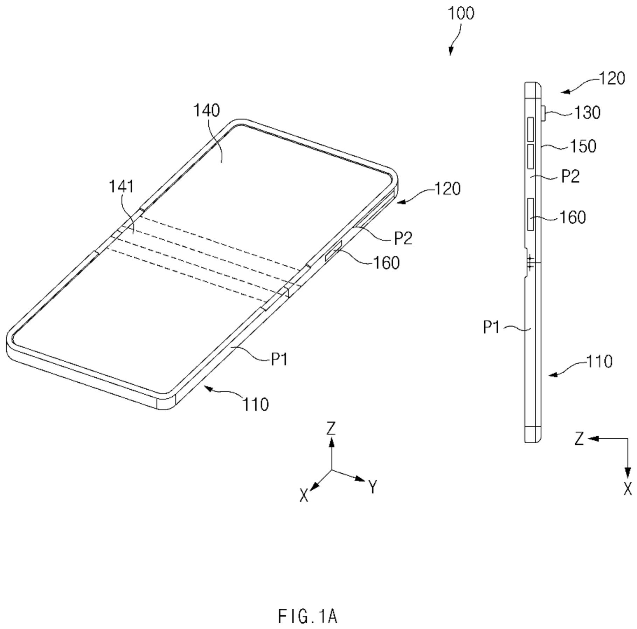

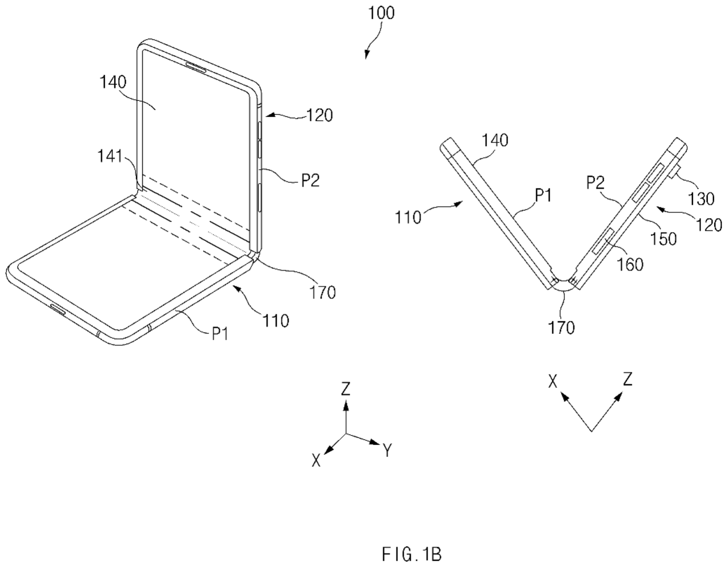

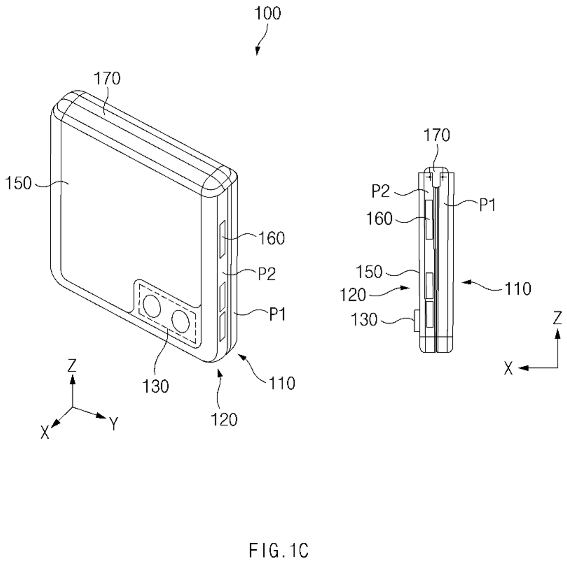

FIG. 1A is a drawing illustrating an unfolded position of an electronic device according to an embodiment. FIG. 1B is a drawing illustrating a half-folded position of an electronic device according to an embodiment. FIG. 1C is a drawing illustrating a folded position of an electronic device according to an embodiment.

Referring to FIG. 1A, FIG. 1B, and FIG. 1C, an electronic device 100 according to an embodiment may be provided in a structure in which a first housing 110 and a second housing 120 are rotatable with each other via a hinge part 170. The electronic device 100 may perform a folding operation (e.g., an operation modified in an order of FIG. 1A, FIG. 1B, and FIG. 1C) or an unfolding operation (e.g., an operation modified in an order of FIG. 1C, FIG. 1B, and FIG. 1C). For example, in the folding operation performed from an unfolded position (a state of FIG. 1A) on the basis of FIGS. 1A to 1C, the first housing 110 may rotate in a clockwise direction and the second housing 120 may rotate in a counterclockwise direction. For example, a folding area 141 may include an area corresponding to an area where a hinge structure of the electronic device 100 is located. For example, the second housing 120 may be configured to movably or rotatably engage with the first housing 110 between the folded position and the unfolded position.

To describe the state of the electronic device 100 according to various embodiments disclosed in the disclosure, a first border surface P1 which is a surface facing in the same direction as a direction in which a fingerprint contact surface of a fingerprint sensor 160 is directed in a side surface of the first housing 110 on the basis of the unfolded position of the electronic device 100 (the state in FIG. 1A) may be defined and a second border surface P2 which is a surface facing the same direction as a direction in which the finger contact surface of the fingerprint sensor 160 is directed in a side surface of the second housing 120. For example, the first border surface P1 may include a part of the first housing 110 and the second border surface P2 may include a part of the second housing 120 and a part of the fingerprint sensor 160 which is located in the second housing 120.

Hereinafter, a description will be given of the unfolded position of the electronic device 100 with reference to FIG. 1A.

The unfolded position may refer to a state in which a folding area 141 of a first flexible display 140 is substantially planar. For example, the unfolded position may be referred to as a state in which an angle between the first housing 110 and the second housing 120 is greater than or equal to a specified first angle (e.g., 120 degrees). For example, the unfolded position may include a state in which the first border surface P1 and the second border surface P2 substantially form one surface. For example, the unfolded position may include a state in which the first flexible display 140 and the second display 150 are parallel to each other while facing mutually opposite directions. For example, the electronic device 100 in the unfolded position may display an image obtained using a camera module 130 on the first flexible display 140.

Hereinafter, a description will be given of a half-folded position of the electronic device 100 with reference to FIG. 1B.

The half-folded position (or an intermediate state) may refer to any state between the unfolded position and the folded position. For example, the half-folded position may be referred to as a state in which the angle between the first housing 110 and the second housing 120 is less than the specified first angle and is greater than or equal to a specified second angle (e.g., 30 degrees). In the half-folded position, the operation mode of the electronic device 100 may be referred to as a table mode. For example, the half-folded position may be interpreted as states except for the folded position and the unfolded position. For example, the half-folded position may include a state in which the folding area 141 of the first flexible display 140 is curved. For example, the half-folded position may include a state in which a length part of the first border surface P1 and a length part of the second border surface P2 form a certain angle rather than 180 degrees. For example, the electronic device 100 in the half-folded position may display an image obtained using the camera module 130 on a partial area of the first flexible display 140.

Hereinafter, a description will be given of the folded position of the electronic device 100 with reference to FIG. 1C.

The folded position may include a state in which a curved surface formed by the folding area 141 of the first flexible display 140 has larger curvature than a curved surface formed by the folding area 141 in the half-folded position. For example, the folded position may be referred to as a state in which the angle between the first housing 110 and the second housing 120 is less than the specified second angle (e.g., 30 degrees). For example, the folded position may refer to a state in which the first border surface P1 and the second border surface P2 substantially come into contact with each other, among a plurality of folded positions.

In the folded position, the first flexible display 140 may fail to be visible from the outside of the electronic device 100. In the folded position, the second display 150 may be visible from the outside of the electronic device 100. For example, the electronic device 100 in the folded position may display an image obtained using the camera module 130 on at least a part of the second display 150.

According to an embodiment, at least a part of the hinge part 170 may form the appearance (or surface) of the electronic device 100 in the half-folded position and the unfolded position. For example, as illustrated in FIG. 1B and FIG. 1C, when the electronic device 100 is in the half-folded position or the folded position, the hinge part 170 may be visually exposed between the first housing 110 and the second housing 120.

According to an embodiment, the electronic device 100 may execute a payment service even in the folded position or the half-folded position. For example, the electronic device 100 may execute an application for supporting the payment service even in the folded position or the half-folded position. As an example, the electronic device 100 may use the payment service via a user input to the second display 150 even in the folded position or the half-folded position. For example, the user may change a payment means or may select a payment scheme, via the user input to the second display 150 even in the folded position or the half-folded position.

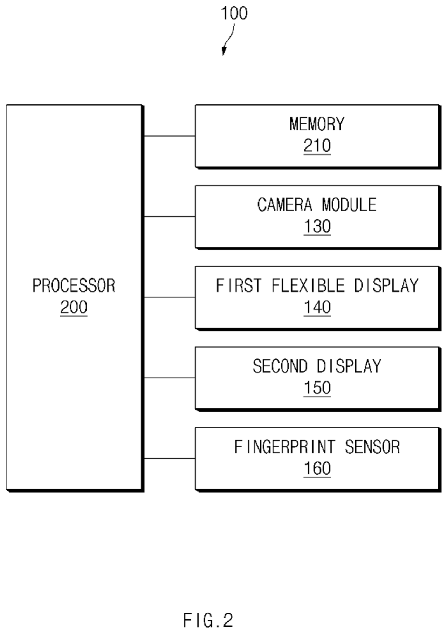

FIG. 2 is a block diagram illustrating a configuration of an electronic device according to an embodiment.

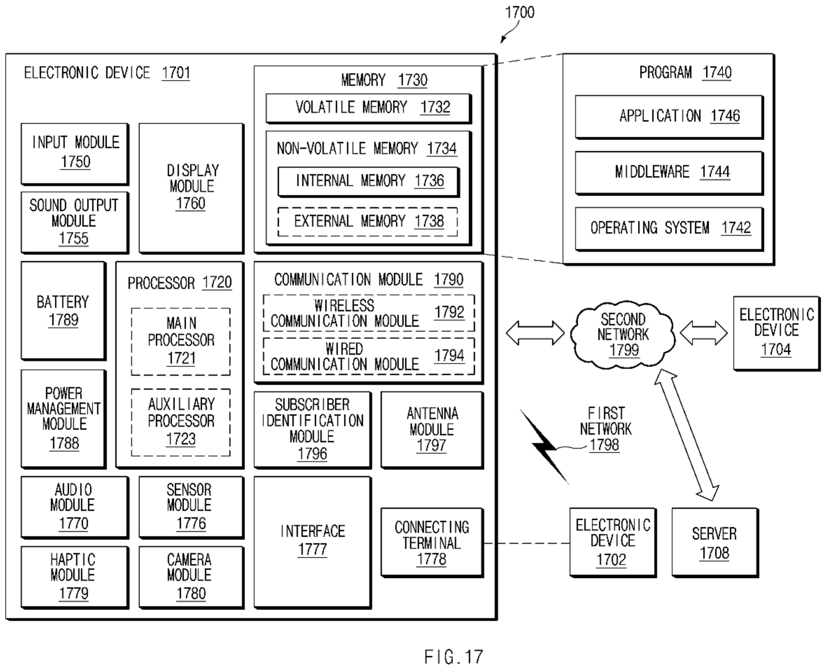

Referring to FIG. 2, an electronic device 100 according to an example may include a processor 200, a memory 210, a camera module 130, a first flexible display 140, a second display 150, and a fingerprint sensor 160. The electronic device 100 of FIG. 2 may correspond to, for example, an electronic device 1701 of FIG. 17. The configurations of the electronic device 100, which will be described in conjunction with FIG. 2, are an example and embodiments of the disclosure are not limited thereto. For example, the electronic device 100 may fail to include at least some of the configurations illustrated in FIG. 2. For example, the electronic device 100 may further include another configuration (e.g., a configuration of the electronic device 1710 of FIG. 17) other than the configurations illustrated in FIG. 2. In an example, the processor 200 may be implemented as one chipset. In an example, the processor 200 may correspond to at least one processor among a plurality of processors. The plurality of processors may be configured to individually or collectively execute instructions to perform operations of the electronic device 100, which will be described below.

The processor 200 may be electrically or operatively connected with the memory 210, the camera module 130, the first flexible display 140, the second display 150, and the fingerprint sensor 160. Being operatively connected between the components may refer to the components being functionally connected with each other or may be communicatively connected with each other. For example, the components operatively connected with each other may transmit and receive data with each other.

The processor 200 may control various components constituting the electronic device 100. The processor 200 may execute instructions stored in the memory 210. For example, the processor 200 may execute a payment service stored in the memory 210 and may perform payment depending on a user input. For example, the processor 200 may correspond to a processor 1720 of FIG. 17.

Instructions for implementing the payment service and various embodiments of the disclosure may be stored in the memory 210. For example, the memory 210 may correspond to a memory 1730 of FIG. 17.

The camera module 130 may obtain image data. For example, the camera module 130 may capture the outside of the electronic device 100 to generate image data. According to an embodiment, the processor 200 may output image data obtained using the camera module 130 on the first flexible display 140 and/or the second display 150. For example, the camera module 130 may correspond to a camera module 1780 of FIG. 17.

The camera module 130 may process an image (e.g., a still image or a moving image) obtained by an image sensor in an image capture mode. According to an embodiment, the camera module 130 may perform zoom-in capable of increasing a zoom magnification such that an image scree is focused on a specific subject in which a user is interested upon image capture or zoom-out capable of decreasing a zoom magnification such that the user captures a subject in a wider range on an image screen. For example, the processor 200 may be configured to adjust a zoom magnification of the camera module 130.

The camera module 130 may include a plurality of cameras. For example, the plurality of cameras may include at least one of a standard camera, a wide angle camera, or a telephoto camera. At least some of the plurality of cameras may selectively facilitate adjustment of a zoom magnification. According to an embodiment, at least one of the plurality of cameras may be at least one camera which is visible from a front side of the housing in the folded position of the electronic device 100 and is located in the second housing 120 and at least another may be at least one camera (e.g., the camera module 130 illustrated in FIG. 1C) which is visible from a rear side of the housing in the unfolded position of the electronic device 100 and is located in the second housing 120.

The first flexible display 140 may enter a screen ON, partial ON (or partial OFF), or OFF state based on the unfolded position, a half-folded position, or the folded position of the electronic device 100. For example, when the electronic device 100 is in the unfolded position, the first flexible display 140 may output one screen on all areas. For example, when the electronic device 100 is in the half-folded position, the first flexible display 140 may output different screens on areas divided on the basis of a folding area (e.g., a folding area 141 of FIG. 1B). For example, when the electronic device 100 is in the folded position, the processor 200 may fail to output a screen on all areas of the first flexible display 140.

The first flexible display 140 may output the operation result of the processor 200. The first flexible display 140 may include a touch screen for receiving a user input. For example, the first flexible display 140 may correspond to a display module 1760 of FIG. 17.

The second display 150 may enter a screen ON, partial ON, or OFF state based on the unfolded position, the half-folded position, or the folded position of the electronic device 100. For example, when the electronic device 100 is in the folded position or the half-folded position, the processor 200 may output a screen on all areas of the second display 150. For example, when the electronic device 100 is in the folded position, the processor 200 may output a screen on at least some areas of the second display 150. For example, when the electronic device 100 is in the unfolded position, the processor 200 may control the second display 150 to an ON or OFF state depending on an operating state of the electronic device 100. For example, the second display 150 may correspond to the display module 1560.

The processor 200 may output the operation result of the processor 200 via the second display 150. The second display 150 may receive a specified user input to implement various embodiments of the disclosure.

The first flexible display 140 and the second display 150 may be connected with a touch integrated circuit (IC) for receiving a touch input or may include the touch IC. For example, the first flexible display 140 and the second display 150 may include a touch panel. The touch panel may be connected with the touch IC. In detail, a display (e.g., the first flexible display 140 and/or the second display 150) may include a layer (e.g., a thin film transistor-liquid crystal display (TFT-LCD), light emitting diode (LED), or active matrix organic light emitting diode (AMOLED) layer or the like) for an output of content and a layer corresponding on a touch panel, may output content via the layer for the output, and may receive a touch input (or a hovering input) of the user via the layer corresponding to the touch panel.

The fingerprint sensor 160 may be located at the side surface of the first housing 110 or the second housing 120. The fingerprint sensor 160 may include an optical sensor for sensing light reflected from an external object (e.g., a finger) or an ultrasonic sensor for sensing the reflected signal. For example, the fingerprint sensor 160 may include a data converter for generating fingerprint information obtained using the optical sensor or the ultrasonic sensor. The fingerprint sensor 160 may transmit the generated fingerprint information to the processor 200. According to an embodiment, the electronic device 100 may further include a conversion circuit (not shown) connected with the fingerprint sensor 160. The conversion circuit may convert and transmit an interface of the fingerprint information obtained from the fingerprint sensor 160 to the at least one processor 200. The above-mentioned configuration of the fingerprint sensor 160 is illustrative and embodiments of the disclosure are not limited thereto. For example, the fingerprint sensor 160 may be configured to detect a fingerprint using a well-known fingerprint detection method. For example, the fingerprint sensor 160 may correspond to a sensor module 1776 of FIG. 17.

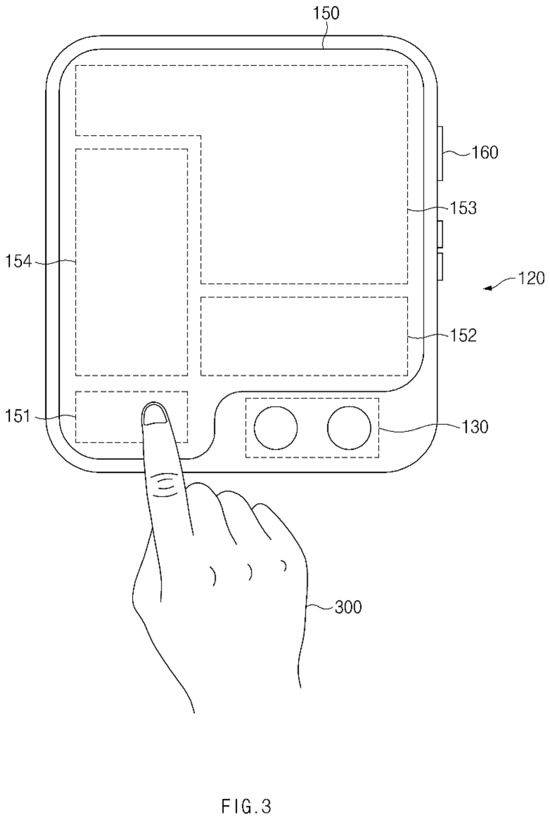

FIG. 3 illustrates areas of a second display of an electronic device according to an embodiment.

Referring to FIG. 3, in an example, a second display 150 of an electronic device 100 may include a first area 151, a second area 152, a third area 153, and a fourth area 154.

The first area 151 may include an area located in a part where the second display 150 protrudes toward one end of a second housing 120 (e.g., a lower end of the second housing 120 of FIG. 3). For example, the first area 151 may include an area which is adjacent to a camera module 130 and is toward the one end of the second housing 120. For example, the first area 151 may have a narrower width than a width of the second display 150 and may have a smaller height than the remaining areas of the second display 150 except for the first area 151. According to an embodiment, the first area 151 may include an area which is adjacent to the camera module 130 and corresponds to a corner part of the second housing 120 among the areas of the second display 150. For example, the first area 151 may include an area which is located side by side in the camera module 130 and corresponds to the corner part of the second housing 120 among the areas of the second display 150. For example, the first area 151 may include an area of the second display 150, which is adjacent to the camera module 130 in a direction in which a plurality of cameras of the camera module 130 are arranged. According to an embodiment, the first area 151 may include an area in which the second to fourth areas 152 to 154 are excluded among the areas of the second display 150.

The second area 152 may include an area which is adjacent to an upper part of the camera module 130 among the areas of the second display 150. According to an embodiment, the second area 152 may include an area of the second display 150, which is adjacent in a direction substantially perpendicular to the direction in which the plurality of cameras of the camera module 130 are arranged. According to an embodiment, the second area 152 may include an area in which the first area 151, the third area 153, and the fourth area 154 are excluded among the areas of the second display 150.

The third area 153 may include an area in which the first area 151, the second area 152, and the fourth area 154 are excluded among the areas of the second display 150. According to an embodiment, a top right area in the third area 153 may include an area adjacent to a second border surface P2 and a camera hinge part 170 among the areas of the second display 150. According to an embodiment, a bottom right area in the third area 153 may include an area adjacent to the second border surface P2 and a right center corner of the second display 150 among the areas of the second display 150. According to an embodiment, an area adjacent to a fingerprint sensor 160 in the third area 153 may include an area located between the top right area in the third area 153 and the bottom right area in the third area 153. According to an embodiment, a bottom left area in the third area 153 may include an area adjacent to the second area 152 and the fourth area 154. For example, the bottom left area in the third area 153 may include an area located in an intermediate area of the second display 150. A top left area in the third area 153 may include an area adjacent to a left corner of the second display 150 in a direction facing the fourth area 154 from the first area 151 among the areas of the second display 150.

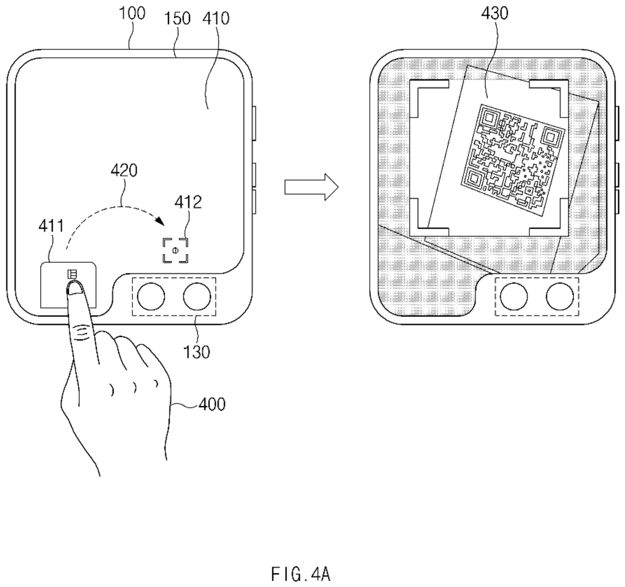

The fourth area 154 may include an area adjacent to a left part of the second housing 120 among the areas of the second display 150. According to an embodiment, the fourth area 154 may include an area adjacent to an upper part of the first area. 151 For example, the fourth area 154 may have a narrower width than the width of the second display 150 and may have a smaller height than the remaining areas of the second display 150 except for the first area 151. According to an embodiment, the fourth area 154 may have the same width as the first area 151 and may have a lager height than a height of the first area 151. Hereinafter, a description will be given of various embodiments for running a payment service in a half-folded position (e.g., FIG. 1B) or a folded position (e.g., FIG. 1C) of the electronic device 100 with reference to FIGS. 4A to 10.

FIG. 4A illustrates a user interface for executing a payment service using a camera in a folded position of an electronic device according to an embodiment.

Referring to FIGS. 2 and 4A, in an example, a processor 200 may display a preparation screen 410 for a payment service using a payment image, on a second display 150, based on a touch input of a user 400 to a first area 151. Furthermore, the processor 200 may display an execution screen 430 for the payment service using the payment image, on the second display 150, based on a swipe input 420 of the user 400. The payment image may include, for example, a QR code or a barcode.

The user 400 may apply a touch input to one area of the second display 150. For example, the touch input of the user 400 may include a swipe input.

The processor 200 may output an image 411 indicating a payment means and an image 412 indicating a payment method on the preparation screen 410 for the payment service using the payment image to guide the user 400 to the touch input. The image 411 indicating the payment means may include, for example, an image of a credit card corresponding to credit card information stored in a memory 210 or a payment means icon corresponding to QR information. The image 412 indicating the payment method may include, for example, an image (e.g., a lens image or a camera image) indicating the payment service using the payment image. In an example, the processor 200 may output a guide (not shown) for guiding the user to a touch input on the preparation screen 410 for the payment service using the payment image.

The swipe input 420 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, a movement of the touch input from the first area 151 may include an operation in which the second input (e.g., the movement of the touch input in a specified direction in the first area 151) is performed in succession to the first input. A movement of the touch input to the second area 152 may include an operation in which the third input (e.g., the movement of the touch input moving from the first area 151 to the second area 152) is performed in succession to the second input.

According to an embodiment, the electronic device 100 may be configured to provide an execution screen 430 for the payment service. In an example, the processor 200 may activate a camera module 130 for the payment service using the payment image. For example, the processor 200 may display an image including payment information obtained via the camera module 130, on the execution screen 430 for the payment service using the payment image. For example, the processor 200 may output an area for cropping the image including the payment information on the execution screen 430.

According to an embodiment, when activating the camera module 130 for capturing the payment image necessary for the execution of the payment service, the processor 200 of the electronic device 100 may provide the user 400 with feedback information from the electronic device 100. For example, the user 400 may fail to look at the execution screen 430 for the payment service using the payment image. In this case, the processor 200 may output audible or tactile feedback information for moving a direction the electronic device 100 faces. For example, the processor 200 may fail to recognize the payment image from the image obtained using the camera module 130. The processor 200 may identify an image corresponding to the payment image from the image, but may fail in recognizing the payment image from the correspondence image. In this case, the processor 200 may output audible or tactile feedback information for guiding to move the electronic device 100 in the direction of the identified correspondence image. For example, the user 400 or a payment requester may adjust a position of the electronic device 100 to scan the payment image, while looking at the execution screen 430 for the payment service using the payment image, thus allowing the processor 200 to recognize the payment image obtained by the camera module 130.

According to an embodiment, the processor 200 of the electronic device 100 may be configured to detect a touch input to the first area 151 of the second display 150, in a folded position, display a first image indicating a payment means on at least a part of the first area 151, when a movement of the touch input from the first area 151 is detected, display a second image on at least a part of the second area 152 of the second display 150, and execute a payment service based on the payment means, using at least one camera (e.g., the camera module 130), when a movement (e.g., a swipe input 420) of the touch input to the second area 152 is detected.

According to an embodiment, the processor 200 of the electronic device 100 may be configured to obtain an image including payment information using the at least one camera, when the movement of the touch input to the second area 152 is detected, and execute the payment service using the obtained image and the payment means.

According to an embodiment, the processor 200 of the electronic device 100 may be configured to perform at least one of adjustment of an optical magnification of the at least one camera, focusing adjustment of the at least one camera, adjustment of a magnification of the obtained image, rotation of the obtained image, sharpness adjustment of the obtained image, or cropping of the obtained image to obtain the image.

According to an embodiment, the processor 200 of the electronic device 100 may be configured to output feedback information including a voice or vibration, when an image corresponding to the payment service is not identified from the obtained image.

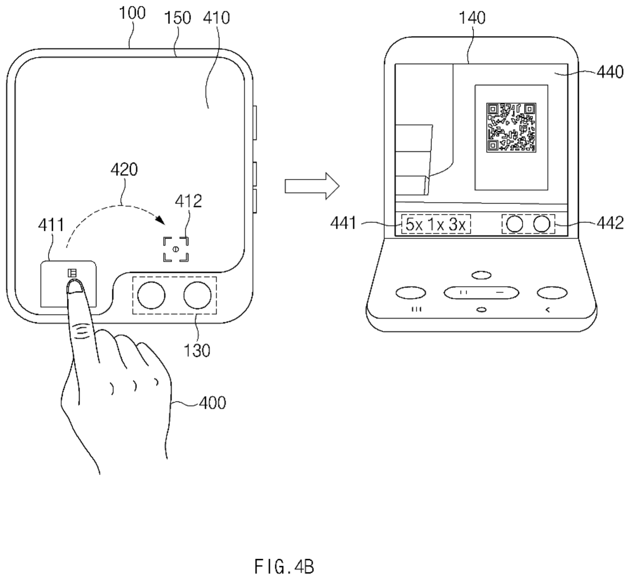

FIG. 4B illustrates a user interface for executing a payment service using a camera in a half-folded position of an electronic device according to an embodiment.

Referring to FIGS. 2 and 4B, in an example, a processor 200 may display a preparation screen 410 for a payment service using a payment image, on a second display 150, in a folded position, based on a touch input of a user 400 to a first area 151. When a swipe input 420 of the user 400 is applied to the second display 150 and then an electronic device 100 changes to a half-folded position by the user 400, an execution screen 440 for the payment service using the payment image may be displayed on at least a part of a first flexible display 140. The payment image may include, for example, a QR code or a barcode.

The user 400 may apply a touch input to one area of the second display 150. According to an embodiment, the touch input of the user 400 may include a swipe input.

The processor 200 may output an image 411 indicating a payment means and an image 412 indicating a payment method on a preparation screen 410 for the payment service using the payment image to guide the user 400 to the touch input. The image 411 indicating the payment means may include, for example, an image of a credit card corresponding to credit card information stored in a memory 210 or a payment means icon corresponding to QR information. The image 412 indicating the payment method may include, for example, an image (e.g., a lens image or a camera image) indicating the payment service using the payment image. According to an embodiment, the processor 200 may output a guide (not shown) for guiding the user to a touch input on the preparation screen 410 for the payment service using the payment image.

The swipe input 420 may be divided into consecutive operations of a first input (touch), a second (drag) input for moving a position of the first input, and a third input (release) corresponding to release of the touch state. For example, a movement of the touch input from the first area 151 may include an operation in which the second input (e.g., the movement of the touch input in a specified direction in the first area 151) is performed in succession to the first input. A movement of the touch input to the second area 152 may include an operation in which the third input (e.g., the movement of the touch input moving from the first area 151 to the second area 152) is performed in succession to the second input.

According to an embodiment, the electronic device 100 may be configured to provide the execution screen 440 for the payment service. The execution screen 440 for the payment service using the payment image may be displayed on at least a part of a first flexible display 140. The processor 200 may execute the camera module 130 for capturing the payment image. For example, the processor 200 may output the execution screen 440 for the payment service using the payment image on a part adjacent to the second housing 120 of the first flexible display 140 and may output the image including the payment information obtained via the camera module 130. For example, the processor 200 may output an area for cropping the image including the payment information on the execution screen 440 for the payment service using the payment image.

In an example, the processor 200 may output a UI 441 for adjustment of an optical magnification of the camera module 130 and adjustment of a magnification of the obtained image on the execution screen 440 for the payment service using the payment image. In an example, the processor 200 may output a UI 442 for selection of a camera (e.g., a telephoto camera or a wide angle camera) of the camera module 130 on the execution screen 440 for the payment service using the payment image. In an example, the processor 200 may output a UI for focusing adjustment of the camera module 130 on the execution screen 440 for the payment service using the payment image.

For example, the user 400 or a payment requester may adjust a position of the electronic device 100 to scan the payment image, while looking at the execution screen 440 for the payment service using the payment image, thus allowing the processor 200 to recognize the payment image obtained by the camera module 130.

According to an embodiment, the processor 200 of the electronic device 100 may be configured to detect a touch input to the first area 151 of the second display 150, in a folded position, display a first image indicating a payment means on at least a part of the first area 151, when a movement of the touch input from the first area 151 is detected, display a second image on at least a part of the second area 152 of the second display 150, and execute a payment service based on the payment means, using at least one camera, when a movement of the touch input to the second area 152 is detected.

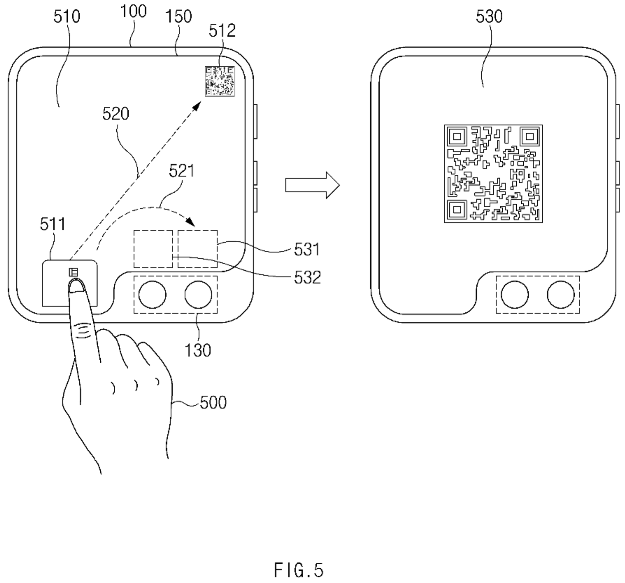

FIG. 5 illustrates a user interface for executing a payment service using a second display, in a folded position of an electronic device according to an embodiment.

Referring to FIG. 5, in an example, a processor 200 may display a preparation screen 510 for a payment service for displaying a payment image, on a second display 150, based on a touch input of a user 500 to a first area 151. Furthermore, the processor 200 may display an execution screen 530 for the payment service for displaying the payment image, on the second display 150, based on a first swipe input 520 or a second swipe input 521 of the user 500. The payment image may include, for example, a QR code or a barcode.

The user 500 may apply a touch input to one area of the second display 150. According to an embodiment, the touch input of the user 500 may include a swipe input.

According to an embodiment, an electronic device 100 may be configured to provide the preparation screen 510 for the payment service. In an example, the processor 200 may output an image 511 indicating a payment means and an image 512 indicating a payment method on the preparation screen 510 for the payment service for displaying the payment image to guide the user 500 to the touch input. The image 511 indicating the payment means may include, for example, an image of a credit card corresponding to credit card information stored in a memory 210 or a payment means icon corresponding to QR information. The image 512 indicating the payment method may include, for example, an image (e.g., a barcode image or a QR pattern image) indicating the payment service for displaying the payment image. In an example, the processor 200 may output a guide (not shown) for guiding the user to a touch input on the preparation screen 510 for the payment service for displaying the payment image.

The first swipe input 520 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, a movement of the touch input from the first area 151 may include an operation in which the second input (e.g., the movement of the touch input in a specified direction in the first area 151) is performed in succession to the first input. A movement of the touch input to a top right area in the third area 153 may include an operation in which the third input (e.g., the movement of the touch input moving from the first area 151 to the top right area in the third area 153) is performed in succession to the second input.

In an example, the second swipe input 521 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, the movement of the touch input from the first area 151 may include an operation in which the second input (e.g., the movement of the touch input in the specified direction in the first area 151) is performed in succession to the first input. A movement of the touch input to a right area 532 in the second area 152 may include an operation in which the third input (e.g., the movement of the touch input moving from the first area 151 to the right area 532 in the second area 152) in succession to the second input.

In an example, a movement of the touch input from the first area 151 to a left area 531 in the second area 152 may correspond to an operation for executing a payment service using a camera and the movement to the right area 532 in the second area 152 may correspond to an operation for executing a payment service for displaying a payment image.

According to an embodiment, the electronic device 100 may be configured to provide the execution screen 530 for the payment service. In an example, the processor 200 may output a unique QR code or barcode of the selected payment means on the execution screen 530 for the payment service for displaying the payment image. For example, the processor 200 may output a QR code or barcode image including authentication information of the payment means, which corresponds to an image 511 indicating the payment means, on the execution screen 530 for the payment service for displaying the payment image. For example, the user 500 may present the payment image shown on the execution screen 530 for the payment service for displaying the payment image to be scanned by the payment requester, thus proceeding with the payment service using the selected payment means.

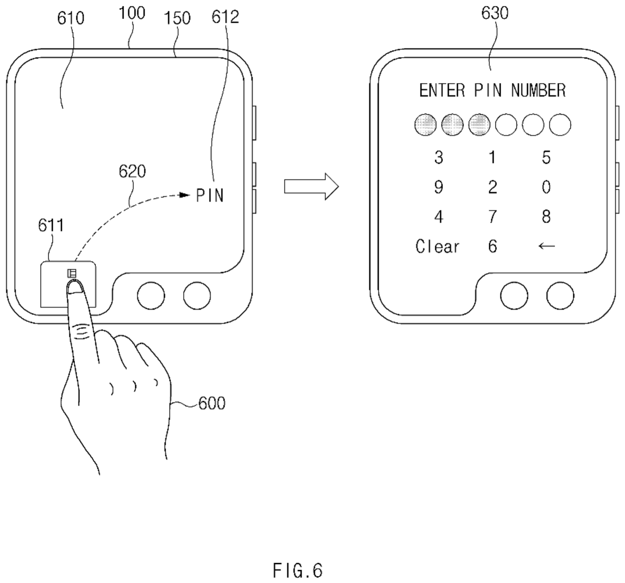

According to an embodiment, the processor 200 of the electronic device 100 may be configured to detect a touch input to the first area 151 of the second display 150, in a folded position, display a first image indicating a payment means on at least a part of the first area 151, when a movement of the touch input from the first area 151 is detected, display a third image on at least a part of the third area 153 of the second display 150, display the payment image on the second display 150, when a movement (e.g., 520 or 521) of the touch input to the third area 153 is detected, and execute a payment service based on the payment means. FIG. 6 illustrates a user interface for executing a payment service based on entering authentication information, in a folded position of an electronic device according to an embodiment.

Referring to FIG. 6, in an example, a processor 200 may display a preparation screen 610 for a payment service for entering a PIN number, on a second display 150, based on a touch input of a user 600 to a first area 151. Furthermore, the processor 200 may display an execution screen 630 for the payment service for entering the PIN number, on the second display 150, based on a swipe input 620 of the user 600.

The user 600 may apply a touch input to one area of the second display 150. According to an embodiment, the touch input of the user 600 may include a swipe input.

The processor 200 may output an image 611 indicating a payment means and an image 612 indicating a payment method on the preparation screen 610 for the payment service for entering the PIN number to guide the user 600 to the touch input. The image 611 indicating the payment means may include, for example, an image of a credit card corresponding to credit card information stored in a memory 210 or a payment means icon corresponding to QR information. The image 612 indicating the payment method may include, for example, an image indicating the payment service for entering the PIN number (e.g., an image of alphabets "PIN" or an image in which circle figures are arranged to correspond to the number of PIN numbers entered). In an example, the processor 200 may output a guide (not shown) for guiding the user to a touch input on the preparation screen 610 for the payment service for entering the PIN number.

The swipe input 620 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, a movement of the touch input from the first area 151 may include an operation in which the second input (e.g., the movement of the touch input in a specified direction in the first area 151) is performed in succession to the first input. A movement of the touch input to a bottom right area in the third area 153 may include an operation in which the third input (e.g., the movement of the touch input moving from the first area 151 to the bottom right area in the third area 153) is performed in succession to the second input.

According to an embodiment, an electronic device 100 may be configured to provide the execution screen 630 for the payment service. In an example, the processor 200 may output a UI for entering a PIN number for authentication of the selected payment means on the execution screen 630 for the payment service for entering the PIN number. For example, the processor 200 may output a UI for guiding the user 600 to enter the PIN number to proceed with authentication of the payment means, which corresponds to an image 611 indicating the payment means, on the execution screen 630 for the payment service for entering the PIN number.

For example, the user 600 may enter the PIN number corresponding to the selected payment means into the execution screen 630 for the payment service for entering the PIN number, thus proceeding with the payment service using the selected payment means. For example, the processor 200 may compare a password (e.g., the PIN number) entered by the user 600 with a password stored in the memory 210. When the entered password and the stored password are identical to each other, the processor 200 may perform the payment service using the selected payment means.

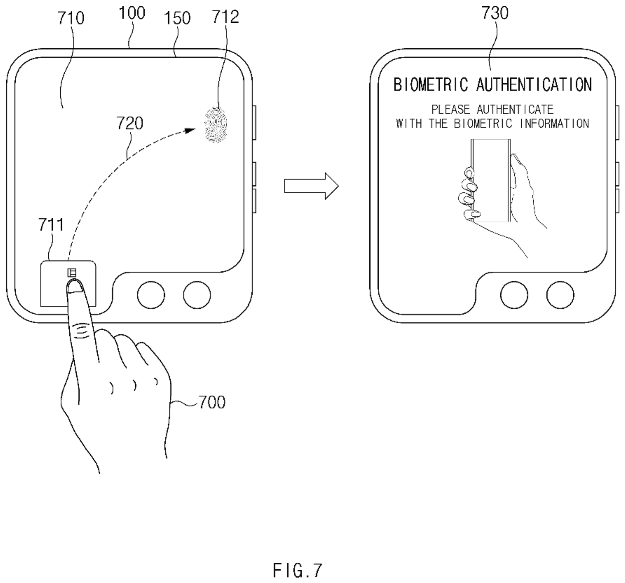

FIG. 7 illustrates a user interface for executing a payment service using fingerprint authentication in a folded position of an electronic device according to an embodiment.

Referring to FIG. 7, in an example, a processor 200 may display a preparation screen 710 for a payment service using fingerprint authentication, on a second display 150, based on a touch input of a user 700 to a first area 151. Furthermore, the processor 200 may display an execution screen 730 for the payment service using the fingerprint authentication, on the second display 150, based on a swipe input 720 of the user 700.

The user 700 may apply a touch input to one area of the second display 150. According to an embodiment, the touch input of the user 700 may include a swipe input.

The processor 200 may output an image 711 indicating a payment means and an image 712 indicating a payment method on the preparation screen 710 for the payment service using the fingerprint authentication to guide the user 700 to the touch input. The image 711 indicating the payment means may include, for example, an image of a credit card corresponding to credit card information stored in a memory 210 or a payment means icon corresponding to QR information. The image 712 indicating the payment method may include, for example, an image indicating the payment service using the fingerprint authentication (e.g., a fingerprint-shaped image or an arrow image pointing to a position of a fingerprint sensor 160). According to an embodiment, the processor 200 may output a guide (not shown) for guiding the user to a touch input on the preparation screen 710 for the payment service using the fingerprint authentication.

The swipe input 720 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, a movement of the touch input from the first area 151 may include an operation in which the second input (e.g., the movement of the touch input in a specified direction in the first area 151) is performed in succession to the first input. A movement of the touch input to an area adjacent to the fingerprint sensor 160 in the third area 153 may include an operation in which the third input (e.g., the movement of the touch input moving from the first area 151 to the area adjacent to the fingerprint sensor 160 in the third area 153) is performed in succession to the second input.

According to an embodiment, an electronic device 100 may be configured to provide the execution screen 730 for the payment service. In an example, the processor 200 may output a UI for guiding the user 700 to enter his or her fingerprint for authentication of the selected payment means on the execution screen 730 for the payment service using the fingerprint authentication. For example, the processor 200 may output an image pointing to a position of the fingerprint sensor 160 attached to a first border surface P1 or a second border surface P2 of the electronic device 100 on the execution screen 730 for the payment service using the fingerprint authentication.

According to an embodiment, the user 700 may allow the fingerprint sensor 160 to recognize a fingerprint of the user 700 in response to the UI displayed on the execution screen 730 for the payment service using the fingerprint authentication, thus proceeding with the payment service using the selected payment means.

According to an embodiment, the processor 200 of the electronic device 100 may be configured to detect a touch input to the first area 151 of the second display 150, in a folded position, display a first image indicating a payment means on at least a part of the first area 151, when a movement of the touch input from the first area 151 is detected, display a third image on at least a part of the third area 153 of the second display 150, and execute a payment service based on the payment means, using fingerprint authentication, when a movement 720 of the touch input to the third area 153 is detected. For example, when succeeding in user authentication using the detected fingerprint, the electronic device 100 may execute the payment service based on the payment means.

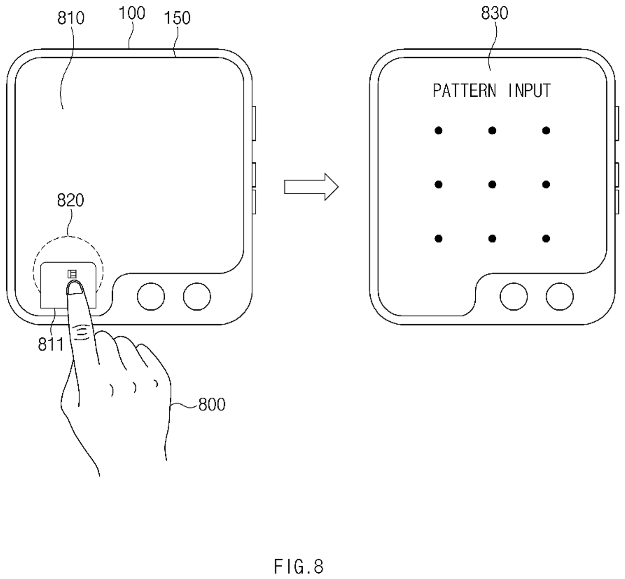

FIG. 8 illustrates a user interface for executing a payment service using pattern authentication, in a folded position of an electronic device according to an embodiment.

Referring to FIG. 8, in an example, a processor 200 may display a preparation screen 810 for a payment service using pattern authentication on a second display 150. The processor 200 may display the preparation screen 810 for the payment service using the pattern authentication, based on a touch input of a user 800 to a first area 151. The processor 200 may display an execution screen 830 for the payment service using the pattern authentication, based on a touch input 820 of the user 800.

The user 800 may apply a touch input to one area of the second display 150. For example, the touch input of the user 800 may include a tap input.

The processor 200 may output an image 811 indicating a payment means on the preparation screen 810 for the payment service using the pattern authentication. The image 811 indicating the payment means may include, for example, an image of a credit card corresponding to credit card information stored in a memory 210 or a payment means icon corresponding to QR information.

The touch input 820 may include a tap input, multiple tap inputs, or a hovering input.

According to an embodiment, an electronic device 100 may be configured to provide the execution screen 830 for the payment service. In an example, the processor 200 may output a UI for guiding the user 800 to the pattern authentication for authentication of the selected payment means, on the execution screen 830 for the payment service using the pattern authentication. For example, the processor 200 may output text instructing a pattern input and a UI of a nine-point pattern capable of receiving the pattern input on the execution screen 830 for the payment service using the pattern authentication.

According to an embodiment, the user 800 may perform a swipe input corresponding to the execution screen 830 for the payment service using the pattern authentication. The swipe input may be divided into consecutive operations of a first input (touch), a second (drag) input for moving a position of the first input, and a third input (release) corresponding to release of the touch state. For example, the user 800 may apply the touch input 820 including a tap input or multiple tap inputs such that the execution screen 830 for the payment service using the pattern authentication is able to be displayed. The user 800 may perform a new swipe input for pattern authentication. For example, the swipe input may be divided into consecutive operations of a first input (touch), a second (drag) input for moving a position of the first input, and a third input (release) corresponding to release of the touch state.

According to an embodiment, the user 800 may perform a swipe input corresponding to a predetermined pattern in response to the UI displayed on the execution screen 830 for the payment service using the pattern authentication, thus proceeding with the payment service using the selected payment means.

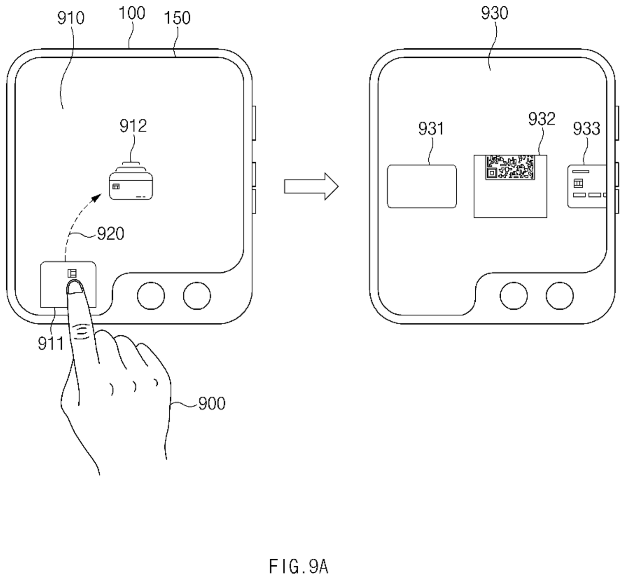

FIG. 9A illustrates a user interface for selecting a payment means used for a payment service, in a folded position of an electronic device according to an embodiment.

Referring to FIG. 9A, in an example, a processor 200 may display a preparation screen 910 for selecting a payment means used for a payment service, on a second display 150, based on a touch input of a user 900 to a first area 151. Furthermore, the processor 200 may display an execution screen 930 for selecting the payment means used for the payment service, on the second display 150, based on a swipe input 920 of the user 900.

The user 900 may apply a touch input to one area of the second display 150. For example, the touch input of the user 900 may include a swipe input.

According to an embodiment, an electronic device 100 may be configured to provide the preparation screen 910 for selecting the payment means. In an example, the processor 200 may output an image 911 indicating a payment means and an image 912 indicating a payment means list on the preparation screen 910 for selecting the payment means used for the payment service to guide the user 900 to the touch input. The image 911 indicating the payment means may include, for example, an image of a credit card corresponding to credit card information stored in a memory 210 or a payment means icon corresponding to QR information. The image 912 indicating of the payment means list may include, for example, an image indicating an operation of selecting the payment means (e.g., an image in which cards are arranged or an image in which an arrow rotates). In an example, the processor 200 may output a guide (not shown) for guiding the user to a touch input on the preparation screen 910 for selecting the payment means used for the payment service.

The swipe input 920 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, a movement of the touch input from the first area 151 may include an operation in which the second input (e.g., the movement of the touch input in a specified direction in the first area 151) is performed in succession to the first input. A movement of the touch input to a bottom left area in a third area 153 may include an operation in which the third input (e.g., the movement of the touch input moving from the first area 151 to the bottom left area in the third area 153) in succession to the second input.

According to an embodiment, an electronic device 100 may be configured to provide the execution screen 930 for selecting the payment means. In an example, the processor 200 may output a UI for guiding the user 900 to select the payment means for selection of the payment means on the execution screen 930 for selecting the payment means used for the payment service. For example, the processor 200 may output a UI capable of displaying or scrolling images 931 to 933 of all payment means, pieces of identification information of which are stored in the memory 210, on the execution screen 930 for selecting the payment means used for the payment service.

According to an embodiment, the processor 200 of the electronic device 100 may output the image 932 of the payment means to be selected to be larger than the images 931 and 933 of the other payment means, while outputting the images 931 to 933 of all the payment means on the execution screen 930 for selecting the payment means used for the payment service. In an example, the processor 200 may display the images 931 and 933 of the payment means which are not selection targets to blur, while outputting the images 931 to 933 of the all the payment means on the execution screen 930 for setting the selected payment means in a pre-defined area.

According to an embodiment, the user 900 may perform a tap input or multiple tap inputs to the image 932 of the payment means to be selected in response to the UI displayed on the execution screen 930 for selecting the payment means used for the payment service to select the payment means.

According to an embodiment, the processor 200 of the electronic device 100 may be configured to detect a touch input to the first area 151 of the second display 150, in a folded position, display a first image indicating a payment means on at least a part of the first area 151, when a movement of the touch input from the first area 151 is detected, display a third image on at least a part of the third area 153 of the second display 150, display a UI for selecting the payment means on the second display 150, when a movement 920 of the touch input to the third area 153 is detected, and identify the selected payment means based on an input corresponding to the UI for selecting the payment means.

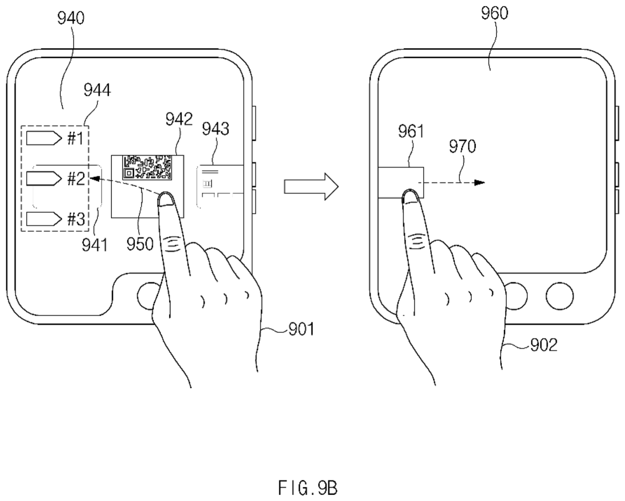

FIG. 9B illustrates a user interface for setting a selected payment means in a pre-defined area, in a folded position of an electronic device according to an embodiment.

Referring to FIG. 9B, in an example, a processor 200 may display a preparation screen 940 for setting the selected payment means in the pre-defined area, on a second display 150, based on a touch input of a user 901 to a bottom left area of a third area 153. Furthermore, the processor 200 may display the selected payment means in the pre-defined area (e.g., a fourth area 154), on the second display 150, based on a swipe input 950 of the user 901.

According to an embodiment, after the selected payment means is set in the pre-defined area, the processor 200 may display a preparation screen 960 for a payment service using the payment means set in the pre-defined area, on the second display 150, based on a touch input of a user 902 to the pre-defined area (e.g., the fourth area 154). The user 902 may proceed with the payment service using the payment means set in the pre-defined area, based on a swipe input 970.

The user 901 or 902 may apply a touch input to one area of the second display 150. For example, the touch input of the user 901 or 902 may include a tap input, multiple tap inputs, and a swipe input.

The processor 200 may output an image 942 indicating the selected payment means and an image 944 indicating the pre-defined area on the preparation screen 940 for setting the selected payment means in the pre-defined area to guide the user 901 to the touch input. The image 942 indicating the payment means may include, for example, an image of a credit card corresponding to credit card information stored in a memory 210 or a payment means icon corresponding to QR information. The image 944 indicating the pre-defined area may include an image (e.g., a post-it image, a star-shaped image, or a # sign) for displaying a specific area. In an example, the processor 200 may output a guide (not shown) for guiding the user to a touch input on the preparation screen 940 for setting the selected payment means in the pre-defined area.

According to an embodiment, an electronic device 100 may be configured to provide the preparation screen 940 for setting the payment means in the pre-defined area. According to an embodiment, the processor 200 may output the image 942 of the payment means to be selected to be larger than the images 931 and 933 of the other payment means, while outputting the images 931 to 933 of all the payment means on the preparation screen 940 for setting the selected payment means in the pre-defined area.

In an example, the processor 200 may output the images 941 and 943 of the payment means which are not selection targets to blur, while outputting the images 941 to 943 of the all the payment means on the preparation screen 940 for setting the selected payment means in the pre-defined area.

According to an embodiment, the image 944 indicating the pre-defined area may be divided into a plurality of areas and areas capable of being set as the pre-defined area may be set as being plural. For example, the selected payment means may be set in one area among areas #1 to #3 displayed on the image 944 indicating the pre-defined area.

The swipe input 950 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, a movement of the touch input to a bottom left area in the third area 153 may include an operation in which the second input (e.g., the movement of the touch input in a specified direction in the bottom left area in the third area 153) is performed in succession to the first input. A movement of the touch input to the fourth area 154 may include an operation in which the third input (e.g., the movement of the touch input moving from the bottom left area in the third area 153 to the fourth area 154) is performed in succession to the second input.

According to an embodiment, the electronic device 100 may be configured to provide the preparation screen 960 for the payment service. In an example, the processor 200 may output an image 961 indicating the payment means set in the pre-defined area on the preparation screen 960 for the payment service using the payment means set in the pre-defined area to guide the user 902 to the touch input. The image 961 indicating the payment means may include, for example, an image of a credit card corresponding to credit card information stored in a memory 210 or a payment means icon corresponding to QR information. In an example, the processor 200 may output a guide (not shown) for guiding the user to a touch input on the preparation screen 960 for the payment service using the payment means set in the pre-defined area.

The swipe input 970 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, the movement of the touch input from the fourth area 154 may include an operation in which the second input (e.g., the movement of the touch input in a specified direction in the fourth area 154) is performed in succession to the second input. A movement of the touch input to the second area 152 or the third area 153 may include an operation in which the third input (e.g., the movement of the touch input moving from the fourth area 154 to the second area 152 or the third area 153) is performed in succession to the second input.

According to an embodiment, the swipe input 970 may be released in the second area 152 or the third area 153. In an example, the processor 200 may be configured to execute, when the swipe input 970 is released in the second area 152, the payment service using the payment image, using the payment means set in the pre-defined area.

According to an embodiment, the processor 200 may be configured to execute, when the swipe input 970 is released in the third area 153, the payment service using the payment image, a payment service for displaying the payment image, a payment service for entering a PIN number, or a payment service using fingerprint authentication, using the payment means set in the pre-defined area.

According to an embodiment, the processor 200 of the electronic device 100 may be configured to detect another touch input to the pre-defined area, in a folded position, display a fourth image on at least a part of the pre-defined area, when a movement of the other touch input to the pre-defined area from the pre-defined area is detected, display a second image on at least a part of the second area 152 of the second display 150, and execute a payment service based on the identified payment means, using at least one camera, when a movement of the other touch input to the pre-defined area to the second area 152 is detected.

According to an embodiment, the processor 200 of the electronic device 100 may be configured to detect another touch input to the pre-defined area, in a folded position, display a fourth image on at least a part of the pre-defined area, when a movement of the other touch input to the pre-defined area from the pre-defined area is detected, display a second image on at least a part of the third area 153 of the second display 150, and execute a payment service based on the identified payment means, using at least one camera, when a movement of the other touch input to the pre-defined area to the third area 153 is detected.

According to an embodiment, the processor 200 of the electronic device 100 may be configured to set a most recently used payment means for the payment service as a default payment means of the payment service, when a payment is completed by the payment service, detect another touch input to the second area 152, and execute the payment service based on the default payment means, when a movement of the other touch input to the second area 152 from the second area 152 is detected.

According to an embodiment, the processor 200 of the electronic device 100 may be configured to set a most recently used payment means for the payment service as a default payment means of the payment service, when a payment is completed by the payment service, detect another touch input to the third area 153, and execute the payment service based on the default payment means, when a movement of the other touch input to the third area 153 from the third area 153 is detected.

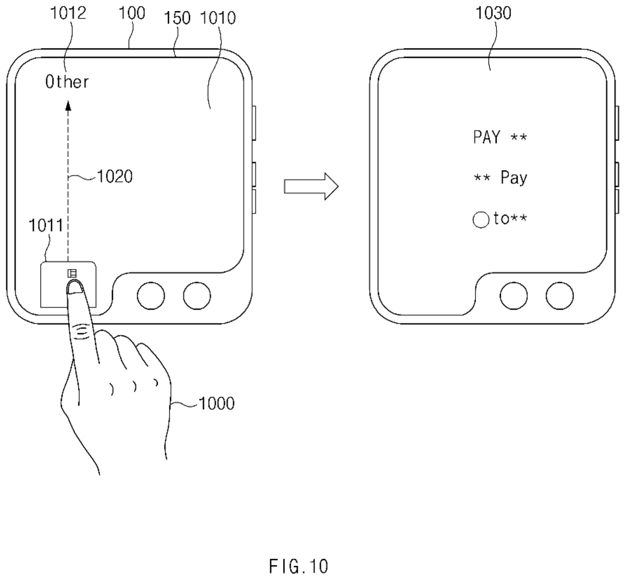

FIG. 10 illustrates a user interface for executing a payment service using online payment authentication, in a folded position of an electronic device according to an embodiment.

Referring to FIG. 10, in an example, a processor 200 may display a preparation screen 1010 for a payment service using online payment authentication, on a second display 150, based on a touch input of a user 1000 to a first area 151. Furthermore, the processor 200 may display an execution screen 1030 for the payment service using the online payment authentication, on the second display 150, based on a swipe input 1020 of the user 1000.

The user 1000 may apply a touch input to one area of the second display 150. According to an embodiment, the touch input of the user 1000 may include a tap input, multiple tap inputs, and a swipe input.

According to an embodiment, an electronic device 100 may be configured to provide the preparation screen 1010 for the payment service. In an example, the processor 200 may output an image 1011 indicating a payment means and an image 1012 indicating a payment method on the preparation screen 1010 for the payment service using the online payment authentication to guide the user 1000 to the touch input. The image 1011 indicating the payment means may include, for example, an image of a credit card corresponding to credit card information stored in a memory 210 or a payment means icon corresponding to QR information. The image 1012 indicating the payment method may include, for example, an image (e.g., an image of alphabets "Other" or an Internet icon) indicating the payment service using the online payment authentication. In an example, the processor 200 may output a guide (not shown) for guiding the user to a touch input on the preparation screen 1010 for the payment service using the online payment authentication.

The swipe input 1020 may be divided into consecutive operations of a first input (e.g., an initial touch input), a second input for moving a position of the first input (e.g., a drag input for moving a position of the touch input in the state in which the initial touch input is maintained), and a third input (e.g., release) corresponding to release of the touch state. For example, a movement of the touch input from the first area 151 may include an operation in which the second input (e.g., the movement of the touch input in a specified direction in the first area 151) is performed in succession to the first input. A movement of the touch input to a top left area in a third area 153 may include an operation in which the third input (e.g., the movement of the touch input moving from the first area 151 to the top left area in the third area 153) in succession to the second input.

According to an embodiment, the electronic device 100 may be configured to provide the execution screen 1030 for the payment service. In an example, the processor 200 may output a UI for guiding to select an online payment scheme of the selected payment means on the execution screen 1030 for the payment service using the online payment authentication. For example, the processor 200 may output a UI for guiding to select an application for supporting the payment service on the execution screen 1030 for the payment service using the online payment authentication. The user 1000 may apply a touch input corresponding to the displayed UI to proceed with the payment service for supporting the selected application. For example, the processor 200 may output a UI capable of accessing a web site capable of proceeding with online payment on the execution screen 1030 for the payment service using the online payment authentication.

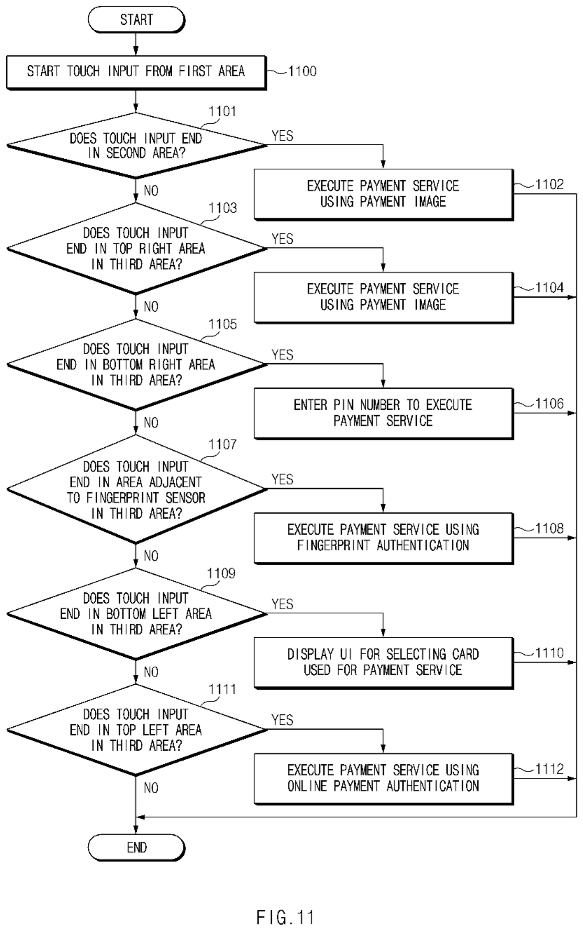

FIG. 11 is a flowchart illustrating an operation of an electronic device according to an embodiment. Operations of the electronic device, which will be described below, may be performed by, for example, an electronic device 100 or a processor 200 of FIGS. 1 and 2.

Referring to FIG. 11, in operation 1100, according to an embodiment, the electronic device 100 may receive a touch input of a user to a first area 151 of a second display 150. The touch input of the user may include a swipe input.

In operation 1101, the processor 200 may determine whether a touch input of the user, which starts from the first area 151, ends in the second area 152 (e.g., releases the touch input). When the touch input ends in the second area 152 (e.g., YES in operation 1101), in operation 1102, the processor 200 may execute a payment service using a payment image.

According to an embodiment, the operating method of the electronic device 100 may include an operation of detecting a touch input to the first area 151 of the second display 150, in a folded position of the electronic device. The method may include an operation of detecting a movement of the touch input from the first area 151. The method may include an operation of displaying a first image indicating a payment means on at least a part of the first area 151 and displaying a second image on at least a part of the second area 152 of the second display 150. The method may include an operation of executing a payment service based on the payment means, using at least one camera, when a movement of the touch input to the second area 152 is detected.

When the touch input does not end in the second area 152 (e.g., NO in operation 1101), in operation 1103, the processor 200 may determine whether the touch input of the user, which starts from the first area 151, ends in a top right area in a third area 153. When the touch input ends in the top right area in the third area 153 (e.g., YES in operation 1103), in operation 1104, the processor 200 may display the payment image to execute the payment service.

According to an embodiment, the operating method of the electronic device 100 may include an operation of displaying a third image on at least a part of the third area 153 of the second display 150, when the movement of the touch input from the first area 151 is detected. The method may include an operation of displaying the payment image on the second display 150 to execute the payment service based on the payment means, when a movement of the touch input to the third area 153 is detected.

When the touch input does not end in the top right area in the third area 153 (e.g., NO in operation 1103), in operation 1105, the processor 200 may determine whether the touch input of the user, which starts from the first area 151, ends in a bottom right area in the third area 153. When the touch input ends in the bottom right area in the third area 153 (e.g., YES in operation 1105), in operation 1106, the processor 200 may enter a PIN number to execute the payment service.

When the touch input does not end in the bottom right area in the third area 153 (e.g., NO in operation 1105), in operation 1107, the processor 200 may determine whether the touch input of the user, which starts from the first area 151, ends in an area adjacent to a fingerprint sensor 160 in the third area 153. When the touch input ends in the area adjacent to the fingerprint sensor 160 in the third area 153 (e.g., YES in operation 1107), in operation 1108, the processor 200 may execute the payment service using fingerprint authentication.

According to an embodiment, the operating method of the electronic device 100 may include an operation of displaying the third image on the at least a part of the third area 153 of the second display 150, which is located in the area adjacent to the fingerprint sensor 160, when the movement of the touch input from the first area 151 is detected. The method may include an operation of executing the payment service based on the payment means, using fingerprint authentication, when the movement of the touch input to the third area 153 is detected.

When the touch input does not end in the area adjacent to the fingerprint sensor 160 in the third area 153 (e.g., NO in operation 1107), in operation 1109, the processor 200 may determine whether the touch input of the user, which starts from the first area 151, ends in a bottom left area in the third area 153. When the touch input ends in the bottom left area in the third area 153 (e.g., YES in operation 1109), in operation 1110, the processor 200 may display a UI for selecting a payment means used for the payment service.

According to an embodiment, the operating method of the electronic device 100 may include an operation of displaying the third image on the at least a part of the third area 153 of the second display 150, when the movement of the touch input from the first area 151 is detected. The method may include an operation of displaying a UI for selecting a payment means on the second display 150, when the movement of the touch input to the third area 153 is detected. The method may include an operation of identifying the selected payment means based on an input corresponding to the UI.

When the touch input does not end in the bottom left area in the third area 153 (e.g., NO in operation 1109), in operation 1111, the processor 200 may determine whether the touch input of the user, which starts from the first area 151, ends in a top left area in the third area 153. When the touch input ends in the top left area in the third area 153 (e.g., YES in operation 1111), in operation 1112, the processor 200 may execute the payment service using online payment authentication.

When the touch input does not end in the top left area in the third area 153 (e.g., NO in operation 1111), the processor 200 may end the process associated with the payment. When the touch input is not released in any one of the specified areas, the processor 200 may determine that there is no situation for performing the payment and may end the process. In this case, the processor 200 may end the display of the payment means image.

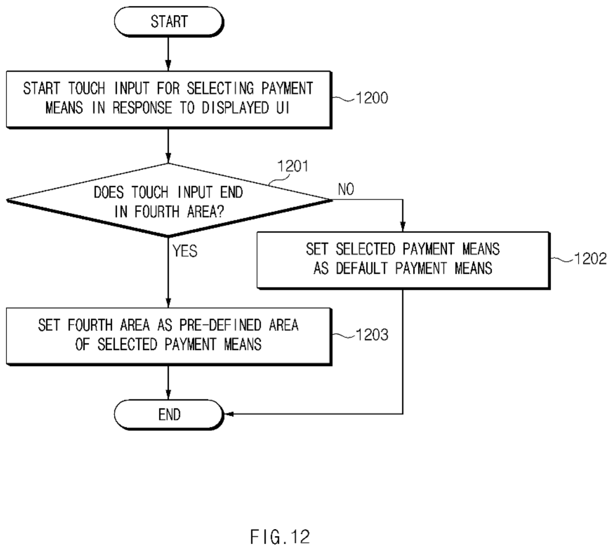

FIG. 12 is a flowchart illustrating an operation addable after operation 1110 of FIG. 11. Operations of an electronic device, which will be described below, may be performed by, for example, an electronic device 100 or a processor 200 of FIGS. 1 and 2.

Referring to FIG. 12, in operation 1200, according to an embodiment, the electronic device 100 may receive a touch input of a user for selecting a payment means in response to a UI displayed on a second display 150, based on the UI displayed in operation 1110. The touch input of the user may include, for example, a tap input, multiple tap inputs, a swipe input, a pen input, and/or a hovering input.

In operation 1201, it may be determined whether the touch input of the user for selecting the payment means ends in a fourth area 154. When the touch input does not end in the fourth area 154 (e.g., NO in operation 1201), in operation 1202, the processor 200 may determine the touch input of the user as simply selecting the payment means and may set the payment means selected in response to the displayed UI as a default payment means.

According to an embodiment, in operation 1202, the payment means set as the default payment means may correspond to a payment means corresponding to an image (e.g., 411, 511, 611, 711, 811, or 911) indicating the payment means.

According to an embodiment, the processor 200 may change the payment means corresponding to the image (e.g., 411, 511, 611, 711, 811, or 911) indicating the payment means set as the default payment means in operation 1202 to the payment means set as the default payment means in operation 1202.

When the touch input ends in the fourth area 154 (e.g., YES in operation 1201), in operation 1203, the processor 200 may set the fourth area 154 as a pre-defined area of the selected payment means.

According to an embodiment, the operating method of the electronic device 100 may include an operation of displaying a fourth image corresponding to the identified payment means on the second display 150. The method may include an operation of setting the fourth area 154 as a pre-defined area corresponding to the identified payment means, when the fourth image moves to the fourth area 154 of the second display 150 based on a touch input to the fourth image.

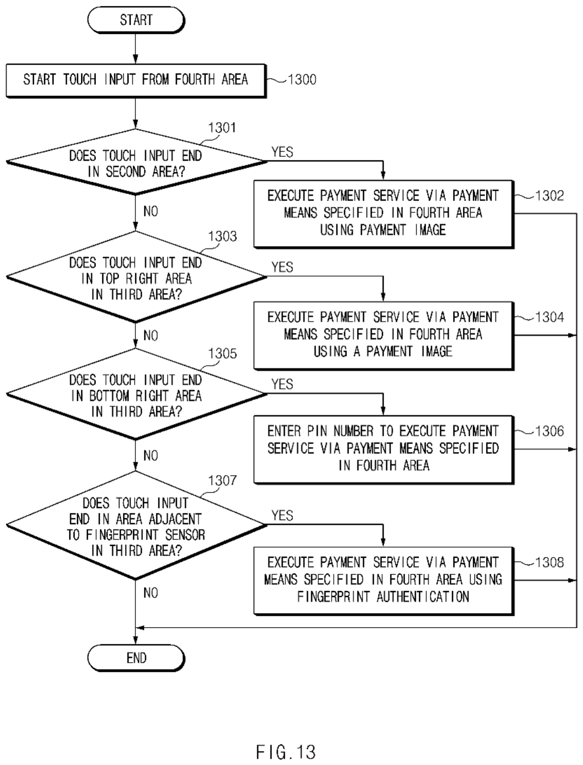

FIG. 13 is a flowchart illustrating an operation addable after operation 1203 of FIG. 12. Operations of an electronic device, which will be described below, may be performed by, for example, an electronic device 100 of FIG. 1 or a processor 200 of FIG. 2.

Referring to FIG. 13, in operation 1300, according to an embodiment, the electronic device 100 may receive a touch input of a user to a fourth area 154 of a second display 150. The touch input of the user may include, for example, a tap input, multiple tap inputs, a swipe input, a pen input, and/or a hovering input.

In operation 1301, the processor 200 may determine whether a touch input of the user, which starts from the fourth area 154, ends in a second area 152. When the touch input ends in the second area 152 (e.g., YES in operation 1301), in operation 1302, the processor 200 may execute a payment service via a payment means specified in the fourth area 154 using a payment image.

When the touch input does not end in the second area 152 (e.g., NO in operation 1301), in operation 1303, the processor 200 may determine whether the touch input of the user, which starts from the fourth area 154, ends in a top right area in a third area 153. When the touch input ends in the top right area in the third area 153 (e.g., YES in operation 1303), in operation 1304, the processor 200 may display the payment image to execute the payment service.

According to an embodiment, the operating method of the electronic device 100 may include an operation of detecting another touch input to a pre-defined area of the second display 150 in a folded position of the electronic device. The method may include an operation of displaying a fourth image on at least a part of the pre-defined area and displaying a third image on at least a part of the third area 153 of the second display 150, when a movement of the another touch input to the pre-defined area from the pre-defined area is detected. The method may include an operation of displaying the payment image on the second display 150 and executing the payment service based on the identified payment means, when the movement of the other touch input to the pre-defined area to the third area 153 is detected.

According to an embodiment, the operating method of the electronic device 100 may include an operation of detecting the other touch input to the pre-defined area of the second display 150, in the folded position of the electronic device. The method may include an operation of displaying a fourth image on at least a part of the pre-defined area and displaying a third image on at least a part of the third area 153 of the second display 150, when a movement of the other touch input to the pre-defined area from the pre-defined area is detected. The method may include an operation of executing the payment service based on the identified payment means, using fingerprint authentication, when a movement of the other touch input to the pre-defined area to the third area 153 is detected.

When the touch input does not end in the top right area in the third area 153 (e.g., NO in operation 1303), in operation 1305, the processor 200 may determine whether the touch input of the user, which starts from the fourth area 154, ends in a bottom right area in the third area 153. When the touch input ends in the bottom right area in the third area 153 (e.g., YES in operation 1305), in operation 1306, the processor 200 may enter a PIN number to execute the payment service.

When the touch input does not end in the bottom right area in the third area 153 (e.g., NO in operation 1305), in operation 1307, the processor 200 may determine whether the touch input of the user, which starts from the fourth area 154, ends in an area adjacent to a fingerprint sensor 160 in the third area 153. When the touch input ends in the area adjacent to the fingerprint sensor 160 in the third area 153 (e.g., YES in operation 1307), in operation 1308, the processor 200 may execute the payment service using fingerprint authentication.

According to an embodiment, the operating method of the electronic device 100 may include an operation of detecting a touch input to the pre-defined area of the second display 150, in the folded position of the electronic device. The method may include an operation of displaying a fourth image on at least a part of the pre-defined area and displaying a third image on at least a part of the third area 153 of the second display 150, when a movement of the touch input to the pre-defined area from the pre-defined area is detected. The method may include an operation of executing the payment service based on the identified payment means, using fingerprint authentication, when a movement of the touch input to the pre-defined area to the third area 153 is detected.

When the touch input does not end in the area adjacent to the fingerprint sensor 160 in the third area 153 (e.g., NO in operation 1307), the processor 200 may determine that there is no situation for performing the situation and may end the process.

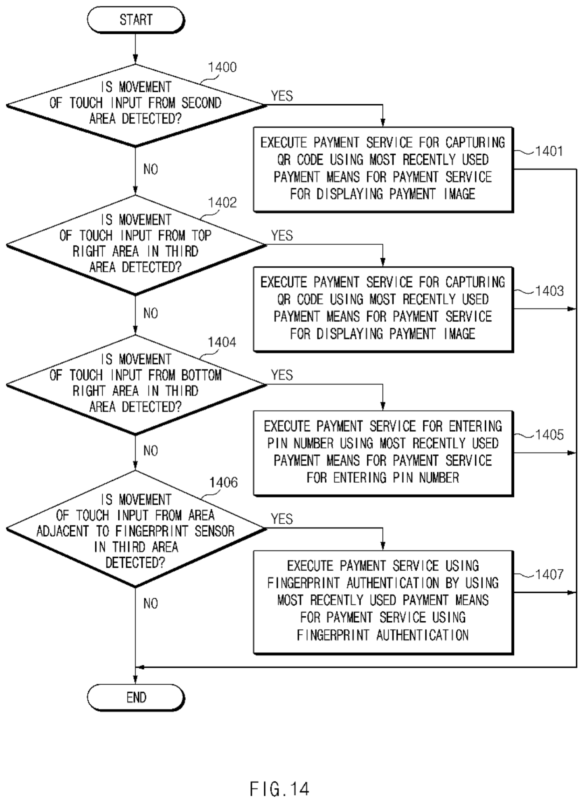

FIG. 14 is a flowchart illustrating an operation of an electronic device according to an embodiment. Operations of the electronic device, which will be described below, may be performed by, for example, an electronic device 100 of FIG. 1 or a processor 200 of FIG. 2.

Referring to FIG. 14, in operation 1400, according to an embodiment, the processor 200 may determine whether a movement of a touch input from a second area 152 is detected. When the movement of the touch input from the second area 152 is detected (e.g., YES in operation 1400), in operation 1401, the processor 200 may execute a payment service using a payment image by using a most recently used payment means for the payment service using the payment image. The payment image may include, for example, a QR code or a barcode.

According to an embodiment, the operating method of the electronic device 100 may include an operation of setting the most recently used payment means for the payment service as a default payment means of the payment service, when a payment is completed by the payment service. The method may include an operation of detecting another touch input to the second area 152 of a second display 150. The method may include an operation of executing the payment service based on the default payment means, when a movement of the other touch input to the second area 152 from the second area 152 is detected.

When the movement of the touch input from the second area 152 is not detected (e.g., NO in operation 1400), in operation 1402, the processor 200 may determine whether a movement of the touch input from a top right area in a third area 153 is detected. When the movement of the touch input from the top right area in the third area 153 is detected (e.g., YES in operation 1402), in operation 1403, the processor 200 may execute a payment service for displaying the payment image using a most recently used payment means for the payment service for displaying the payment image.

When the movement of the touch input from the top right area in the third area 153 is not detected (e.g., NO in operation 1402), in operation 1404, the processor 200 may determine whether a movement of the touch input from a bottom right area in the third area 153 is detected. When the movement of the touch input from the bottom right area in the third area 153 is detected (e.g., YES in operation 1404), in operation 1405, the processor 200 may execute a payment service for entering a PIN number using a most recently used payment means for the payment service for entering the PIN number.

When the movement of the touch input from the bottom right area in the third area 153 is not detected (e.g., NO in operation 1404), in operation 1406, the processor 200 may determine whether a movement of the touch input from an area adjacent to a fingerprint sensor 160 in the third area 153 is detected. When the movement of the touch input from the area adjacent to the fingerprint sensor 160 in the third area 153 is detected (e.g., YES in operation 1406), in operation 1407, the processor 200 may execute a payment service using fingerprint authentication by using a most recently used payment means for the payment service using the fingerprint authentication.

When the movement of the touch input from the area adjacent to the fingerprint sensor 160 in the third area 153 is not detected (e.g., NO in operation 1406), the processor 200 may determine that there is no situation for performing the payment and may end the process.

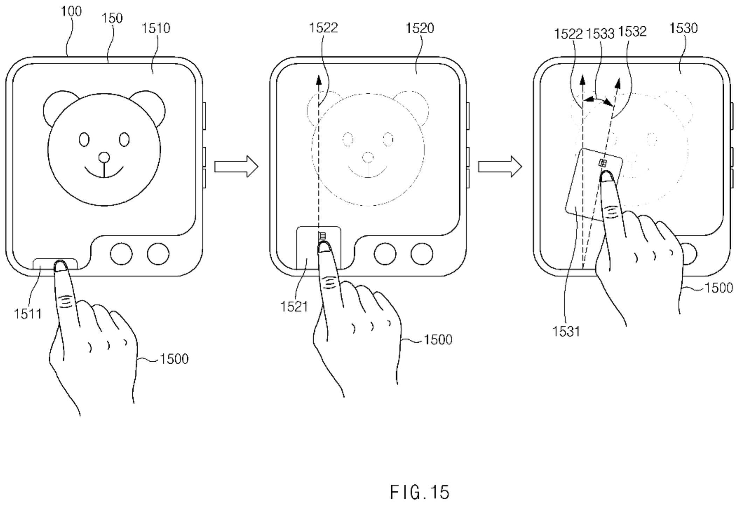

FIG. 15 illustrates a user interface for displaying a payment means in response to a touch input, in a folded position of an electronic device according to an embodiment.

Referring to FIG. 15, in an example, a processor 200 may display a screen 1510 for a payment means, on a second display 150. Furthermore, the processor 200 may display different execution screens for displaying the payment means in response to a touch input of a user 1500 to a first area 151 (e.g., 1520 and 1530).

The user 1500 may apply a touch input to one area of the second display 150. According to an embodiment, the touch input of the user 1500 may include a tap input, multiple tap inputs, and a swipe input.

According to an embodiment, an electronic device 100 may be configured to provide the screen 1510 for the payment means. In an example, the processor 200 may output an image 1511 indicating a part of a payment means image on a preparation screen 1510 for displaying the payment means. The image 1511 indicating the part of the payment means image may include, for example, a part of an image of a credit card corresponding to credit card information stored in a memory 210 or a part of a payment means icon corresponding to QR information.

The processor 200 may display an image for varying the image (e.g., 1511, 1521) indicating the part of the payment means image to an image 1531 indicating all of the payment means image, in response to an increase in movement distance of the touch input of the user 1500 to the first area 151 from the first area 151. In an example, the processor 200 may be configured to display the image for varying the image (e.g., 1511, 1521) indicating the part of the payment means image to the image 1531 indicating all of the payment means image, in proportion to a movement distance of a drag input to the first area 151 in a vertical direction 1522 from the first area 151. For example, when the drag input in the vertical direction 1522 is applied, the processor 200 may display the first image 1511 indicating the part of the payment means image, when the drag input in the vertical direction 1522 is located at a lower end of the first area 151, may display the second image 1521 indicating a part of the payment means image, when the drag input in the vertical direction 1522 is located at an upper end of the first area 151, and may display the image 1531 indicating all of the payment means image, when the drag input in the vertical direction 1522 is located at an intermediate end of a fourth area 154. In an example, the vertical direction 1522 may correspond to a vertical component of the drag input. For example, when vertical component coordinates of the drag input which is in a diagonal direction is located at the intermediate end of the fourth area 154, the image 1531 indicating all of the payment means image may be displayed.

For example, when the drag input in any direction is applied, the processor 200 may display the first image 1511 indicating the part of the payment means image, when the drag input in the any direction is located at a lower end of the first area 151, may display the second image 1521 indicating the part of the payment means image, when the drag input in the any direction is located at the upper end of the first area 151, and may display the image 1531 indicating all of the payment means image, when the drag input in the any direction is located at the intermediate end of the fourth area 154. In an example, the drag input in the any direction may include a drag input in the form of a free curve. For example, when the drag input in the any direction is located at the intermediate end of the fourth area 154, the image 1531 indicating all the payment means image may be displayed.

The processor 200 may set a screen 1510 for displaying a payment means to have lower illumination, brightness, or sharpness, in response to an increase in movement distance of the touch input of the user 1500 to the first area 151 from the first area 151 (e.g., 1520, 1530). In an example, the processor 200 may set the screen 1510 for displaying the payment means to have lower illumination, brightness, or sharpness, in proportion to the movement distance of the drag input to the first area 151 in the vertical direction from the first area 151.

The processor 200 may display an image for rotating an alignment direction of images (e.g., 1511, 1521, 1531) indicating a part or all of the payment means image, in response to a change in movement direction of the touch input of the user 1500 to the first area 151 from the first area 151. In an example, the processor 200 may display the image for rotating the alignment direction of the images (e.g., 1511, 1521, 1531) indicating the part or all of the payment means image, in response to a change in angle 1533 formed by a progress direction 1532 of the drag input to the first input 151 and a vertical direction 1522. For example, the processor 200 may display an image which rotates according to the progress direction of the drag input, such that longitudinal directions of the images (e.g., 1511, 1521, 1531) indicating the part or all of the payment means image maintain an angle parallel to the progress direction 1532 of the drag input. In an example, shapes of the images (e.g., 1511, 1521, 1531) indicating the part or all of the payment means image may include a rectangle, a parallelogram, or various types of shapes. For example, the processor 200 may display the image which rotates according to the progress direction of the drag input, such that a one-axis direction or a one-border surface direction of the images (e.g., 1511, 1521, 1531) indicating the part or all of the payment means image maintains an angle parallel to the progress direction 1532 of the drag input.

According to an embodiment, the processor 200 of the electronic device 100 may be configured to detect a touch input to the first area 151 of the second display 150, in a folded position, display a part 1511 of a first image indicating a payment means on at least a part of the first area 151, when a movement of the touch input from the first area 151 is detected, and display all 1531 of the first image, in response to an increase in movement distance of the touch input from the first area 151.

According to an embodiment, the processor 200 of the electronic device 100 may be configured to change and display a shape or an alignment direction of the first image, in response to a change in movement direction of the touch input from the first area 151.

According to an embodiment, the processor 200 of the electronic device 100 may be configured to apply a dimming effect to an area except for the first image (e.g., 1511, 1521, 1531) in the area of the second display 150, in response to an increase in movement distance of the touch input from the first area 151.

According to an embodiment, the processor 200 of the electronic device 100 may be configured to change and display a shape or an alignment direction of the first image, in response to a change in movement direction of the touch input from the first area 151.

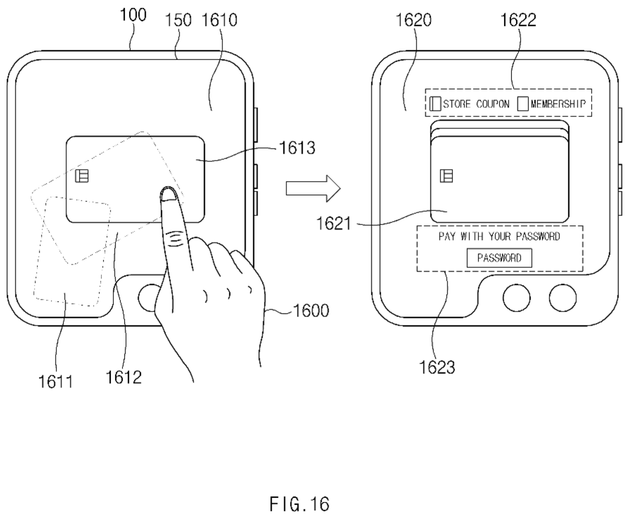

FIG. 16 illustrates a user interface for displaying a payment means in response to a touch input, in a folded position of an electronic device according to an embodiment.

Referring to FIG. 16, in an example, a processor 200 may display a screen 1610 for displaying a payment means, on a second display 150. Furthermore, the processor 200 may display a screen 1620 for executing a payment service in response to a touch input of a user 1600 to a first area 151, on the second display 150.

The user 1600 may apply a touch input to one area of the second display 150. According to an embodiment, the touch input of the user 1600 may include a tap input, multiple tap inputs, and a swipe input.

According to an embodiment, an electronic device 100 may be configured to provide the screen 1610 for displaying the payment means. In an example, the processor 200 may output an image 1611 of the payment means with a first size on a preparation screen 1610 for displaying the payment means. The image 1611 of the payment means with the first size may include, for example, a part of an image of a credit card corresponding to credit card information stored in a memory 210 or a part of a payment means icon corresponding to QR information.

The processor 200 may display an image for varying the image 1611 of the payment means with the first size to an image 1613 of the payment means with a second size, in response to an increase in movement distance of the touch input of the user 1600 to the first area 151 from the first area 151. In an example, the processor 200 may be configured to display the image for varying the image 1611 of the payment means with the first size to the image 1613 of the payment means with the second size, in proportion to a movement distance of a drag input to the first area 151 in a vertical direction (e.g., 1522 of FIG. 15) from the first area 151. For example, when the drag input in the vertical direction is applied, the processor 200 may display the image 1611 of the payment means with the first size, when the drag input in the vertical direction 1522 is located at a lower end of the first area 151, may display an image 1612 of the payment means with an intermediate size between the first size and the second size, when the drag input in the vertical direction is located at an upper end of the first area 151, and may display the image 1613 of the payment means with the second size, when the drag input in the vertical direction is located at an intermediate end of a fourth area 154. In an example, the vertical direction may correspond to a vertical component of the drag input. For example, when vertical component coordinates of the drag input in a diagonal direction is located at the intermediate end of the fourth area 154, the image 1613 of the payment means with the second size may be displayed. For example, when the drag input in vertical direction is released at the intermediate end of the fourth area 154, the processor 200 may display the image 1613 of the payment means with the second size.

For example, when the drag input in any direction is applied, the processor 200 may display the image 1611 of the payment means with the first size, when the drag input in the any direction is located at the lower end of the first area 151, may display the image 1612 of the payment means with the intermediate size between the first size and the second size, when the drag input in the any direction is located at the upper end of the first area 151, and may display the image 1613 of the payment means with the second size, when the drag input in the any direction is located at the intermediate end of the fourth area 154. In an example, the vertical direction may correspond to a vertical component of the drag input. In an example, the drag input in the any direction may include a drag input in the form of a free curve. For example, when the drag input in the any direction is located at the intermediate end of the fourth area 154, the image 1613 of the payment means with the second size may be displayed. For example, when the drag input in the any direction is released at the intermediate end of the fourth area 154, the processor 200 may display the image 1613 of the payment means with the second size.

In an example, the processor 200 may display an image which rotates such that the image 1611 of the payment means with the first size has a first alignment direction and the image 1613 of the payment means with the second size has a second alignment direction, in response to an increase in movement distance of the touch input of the user 1600 to the first area 151 from the first area 151. For example, an image which rotates such that the image 1611 of the payment means with the first size has a vertical direction and the image 1613 of the payment means with the second size has a horizontal direction may be displayed, in response to an increase in movement distance of the touch input of the user 1600 to the first area 151 from the first area 151. An image which rotates such that the image 1611 of the payment means with the first size has a portrait form and the image 1613 of the payment means with the second size has a landscape form may be displayed in response to an increase in movement distance of the touch input of the user 1600 to the first area 151 from the first area 151.

In an example, when the image 1613 of the payment means with the second size is displayed, the processor 200 may display a screen 1620 for executing the payment means. For example, when the image 1613 of the payment means with the second size is displayed, in response to the movement of the touch input of the user 1600 to the first area 151 from the first area 151, UIs 1622 and 1623 for proceeding with the payment service may be displayed. For example, the UIs for proceeding with the payment service, which are illustrated in FIG. 16, may correspond to UIs included in an execution screen (e.g., 430, 440, 530, 630, 730, 830, 930, 1030) illustrated in FIGS. 4A to 10.

According to an embodiment, the processor 200 of the electronic device 100 may be configured to change and display the size of the first image from the first size 1611 to the second size 1613, in response to an increase in movement distance of the touch input from the first area 151.

FIG. 17 is a block diagram illustrating an electronic device in a network environment according to an embodiment.

Referring to FIG. 17, the electronic device 1701 in the network environment 1700 may communicate with an electronic device 1702 via a first network 1798 (e.g., a short-range wireless communication network), or at least one of an electronic device 1704 or a server 1708 via a second network 1799 (e.g., a long-range wireless communication network). According to an embodiment, the electronic device 1701 may communicate with the electronic device 1704 via the server 1708. According to an embodiment, the electronic device 1701 may include a processor 1720, memory 1730, an input module 1750, a sound output module 1755, a display module 1760, an audio module 1770, a sensor module 1776, an interface 1777, a connecting terminal 1778, a haptic module 1779, a camera module 1780, a power management module 1788, a battery 1789, a communication module 1790, a subscriber identification module(SIM) 1796, or an antenna module 1797. In some embodiments, at least one of the components (e.g., the connecting terminal 1778) may be omitted from the electronic device 1701, or one or more other components may be added in the electronic device 1701. In some embodiments, some of the components (e.g., the sensor module 1776, the camera module 1780, or the antenna module 1797) may be implemented as a single component (e.g., the display module 1760).

The processor 1720 may execute, for example, software (e.g., a program 1740) to control at least one other component (e.g., a hardware or software component) of the electronic device 1701 coupled with the processor 1720, and may perform various data processing or computation. According to one embodiment, as at least part of the data processing or computation, the processor 1720 may store a command or data received from another component (e.g., the sensor module 1776 or the communication module 1790) in volatile memory 1732, process the command or the data stored in the volatile memory 1732, and store resulting data in non-volatile memory 1734. According to an embodiment, the processor 1720 may include a main processor 1721 (e.g., a central processing unit (CPU) or an application processor (AP)), or an auxiliary processor 1723 (e.g., a graphics processing unit (GPU), a neural processing unit (NPU), an image signal processor (ISP), a sensor hub processor, or a communication processor (CP)) that is operable independently from, or in conjunction with, the main processor 1721. For example, when the electronic device 1701 includes the main processor 1721 and the auxiliary processor 1723, the auxiliary processor 1723 may be adapted to consume less power than the main processor 1721, or to be specific to a specified function. The auxiliary processor 1723 may be implemented as separate from, or as part of the main processor 1721.

The auxiliary processor 1723 may control at least some of functions or states related to at least one component (e.g., the display module 1760, the sensor module 1776, or the communication module 1790) among the components of the electronic device 1701, instead of the main processor 1721 while the main processor 1721 is in an inactive (e.g., sleep) state, or together with the main processor 1721 while the main processor 1721 is in an active state (e.g., executing an application). According to an embodiment, the auxiliary processor 1723 (e.g., an image signal processor or a communication processor) may be implemented as part of another component (e.g., the camera module 1780 or the communication module 1790) functionally related to the auxiliary processor 1723. According to an embodiment, the auxiliary processor 1723 (e.g., the neural processing unit) may include a hardware structure specified for artificial intelligence model processing. An artificial intelligence model may be generated by machine learning. Such learning may be performed, e.g., by the electronic device 1701 where the artificial intelligence is performed or via a separate server (e.g., the server 1708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1730 may store various data used by at least one component (e.g., the processor 1720 or the sensor module 1776) of the electronic device 1701. The various data may include, for example, software (e.g., the program 1740) and input data or output data for a command related thereto. The memory 1730 may include the volatile memory 1732 or the non-volatile memory 1734.

The program 1740 may be stored in the memory 1730 as software, and may include, for example, an operating system (OS) 1742, middleware 1744, or an application 1746.

The input module 1750 may receive a command or data to be used by another component (e.g., the processor 1720) of the electronic device 1701, from the outside (e.g., a user) of the electronic device 1701. The input module 1750 may include, for example, a microphone, a mouse, a keyboard, a key (e.g., a button), or a digital pen (e.g., a stylus pen).

The sound output module 1755 may output sound signals to the outside of the electronic device 1701. The sound output module 1755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1760 may visually provide information to the outside (e.g., a user) of the electronic device 1701. The display module 1760 may include, for example, a display, a hologram device, or a projector and control circuitry to control a corresponding one of the display, hologram device, and projector. According to an embodiment, the display module 1760 may include a touch sensor adapted to detect a touch, or a pressure sensor adapted to measure the intensity of force incurred by the touch.

The audio module 1770 may convert a sound into an electrical signal and vice versa. According to an embodiment, the audio module 1770 may obtain the sound via the input module 1750, or output the sound via the sound output module 1755 or a headphone of an external electronic device (e.g., an electronic device 1702) directly (e.g., wiredly) or wirelessly coupled with the electronic device 1701.

The sensor module 1776 may detect an operational state (e.g., power or temperature) of the electronic device 1701 or an environmental state (e.g., a state of a user) external to the electronic device 1701, and then generate an electrical signal or data value corresponding to the detected state. According to an embodiment, the sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1777 may support one or more specified protocols to be used for the electronic device 1701 to be coupled with the external electronic device (e.g., the electronic device 1702) directly (e.g., wiredly) or wirelessly. According to an embodiment, the interface 1777 may include, for example, a high definition multimedia interface (HDMI), a universal serial bus (USB) interface, a secure digital (SD) card interface, or an audio interface.

A connecting terminal 1778 may include a connector via which the electronic device 1701 may be physically connected with the external electronic device (e.g., the electronic device 1702). According to an embodiment, the connecting terminal 1778 may include, for example, a HDMI connector, a USB connector, a SD card connector, or an audio connector (e.g., a headphone connector).

The haptic module 1779 may convert an electrical signal into a mechanical stimulus (e.g., a vibration or a movement) or electrical stimulus which may be recognized by a user via his tactile sensation or kinesthetic sensation. According to an embodiment, the haptic module 1779 may include, for example, a motor, a piezoelectric element, or an electric stimulator.

The camera module 1780 may capture a still image or moving images. According to an embodiment, the camera module 1780 may include one or more lenses, image sensors, image signal processors, or flashes.

The power management module 1788 may manage power supplied to the electronic device 1701. According to one embodiment, the power management module 1788 may be implemented as at least part of, for example, a power management integrated circuit (PMIC).

The battery 1789 may supply power to at least one component of the electronic device 1701. According to an embodiment, the battery 1789 may include, for example, a primary cell which is not rechargeable, a secondary cell which is rechargeable, or a fuel cell.

The communication module 1790 may support establishing a direct (e.g., wired) communication channel or a wireless communication channel between the electronic device 1701 and the external electronic device (e.g., the electronic device 1702, the electronic device 1704, or the server 1708) and performing communication via the established communication channel. The communication module 1790 may include one or more communication processors that are operable independently from the processor 1720 (e.g., the application processor (AP)) and supports a direct (e.g., wired) communication or a wireless communication. According to an embodiment, the communication module 1790 may include a wireless communication module 1792 (e.g., a cellular communication module, a short-range wireless communication module, or a global navigation satellite system (GNSS) communication module) or a wired communication module 1794 (e.g., a local area network (LAN) communication module or a power line communication (PLC) module). A corresponding one of these communication modules may communicate with the external electronic device via the first network 1798 (e.g., a short-range communication network, such as Bluetooth^{™}, wireless-fidelity (Wi-Fi) direct, or infrared data association (IrDA)) or the second network 1799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1792 may identify and authenticate the electronic device 1701 in a communication network, such as the first network 1798 or the second network 1799, using subscriber information (e.g., international mobile subscriber identity (IMSI)) stored in the subscriber identification module 1796.

The wireless communication module 1792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1792 may support a high-frequency band (e.g., the mmWave band) to achieve, e.g., a high data transmission rate. The wireless communication module 1792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1792 may support various requirements specified in the electronic device 1701, an external electronic device (e.g., the electronic device 1704), or a network system (e.g., the second network 1799). According to an embodiment, the wireless communication module 1792 may support a peak data rate (e.g., 20Gbps or more) for implementing eMBB, loss coverage (e.g., 1764dB or less) for implementing mMTC, or U-plane latency (e.g., 0.5ms or less for each of downlink (DL) and uplink (UL), or a round trip of 17ms or less) for implementing URLLC.

The antenna module 1797 may transmit or receive a signal or power to or from the outside (e.g., the external electronic device) of the electronic device 1701. According to an embodiment, the antenna module 1797 may include an antenna including a radiating element composed of a conductive material or a conductive pattern formed in or on a substrate (e.g., a printed circuit board (PCB)). According to an embodiment, the antenna module 1797 may include a plurality of antennas (e.g., array antennas). In such a case, at least one antenna appropriate for a communication scheme used in the communication network, such as the first network 1798 or the second network 1799, may be selected, for example, by the communication module 1790 (e.g., the wireless communication module 1792) from the plurality of antennas. The signal or the power may then be transmitted or received between the communication module 1790 and the external electronic device via the selected at least one antenna. According to an embodiment, another component (e.g., a radio frequency integrated circuit (RFIC)) other than the radiating element may be additionally formed as part of the antenna module 1797.

According to various embodiments, the antenna module 1797 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1701 and the external electronic device 1704 via the server 1708 coupled with the second network 1799. Each of the electronic devices 1702 or 1704 may be a device of a same type as, or a different type, from the electronic device 1701. According to an embodiment, all or some of operations to be executed at the electronic device 1701 may be executed at one or more of the external electronic devices 1702, 1704, or 1708. For example, if the electronic device 1701 should perform a function or a service automatically, or in response to a request from a user or another device, the electronic device 1701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1701. The electronic device 1701 may provide the outcome, with or without further processing of the outcome, as at least part of a reply to the request. To that end, a cloud computing, distributed computing, mobile edge computing (MEC), or client-server computing technology may be used, for example. The electronic device 1701 may provide ultra low-latency services using, e.g., distributed computing or mobile edge computing. In another embodiment, the external electronic device 1704 may include an internet-of-things (IoT) device. The server 1708 may be an intelligent server using machine learning and/or a neural network. According to an embodiment, the external electronic device 1704 or the server 1708 may be included in the second network 1799. The electronic device 1701 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1740) including one or more instructions that are stored in a storage medium (e.g., internal memory 1736 or external memory 1738) that is readable by a machine (e.g., the electronic device 1701). For example, a processor (e.g., the processor 1720) of the machine (e.g., the electronic device 1701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a housing including a first housing and a second housing configured to movably engage with the first housing between a folded position and an unfolded position;
a first flexible display visible from a front side of the housing in the unfolded position;
a second display visible from a rear side of the housing in the unfolded position and located at the second housing;
at least one camera visible from the rear side of the housing in the unfolded position and located at the second housing;
memory; and
at least one processor electrically connected to the first flexible display, the second display, the at least one camera, and the memory,
wherein the at least one processor is configured to:
detect a touch input for a first area of the second display in the folded position;
display, when a movement of the touch input from the first area is detected, a first image indicating a payment means on at least a part of the first area and a second image on at least a part of a second area of the second display; and
execute, when a movement of the touch input to the second area is detected, a payment service based on the payment means using the at least one camera.

2. The electronic device of claim 1, wherein the first area is located in a part where the second display protrudes toward one end of the second housing, and
wherein the at least one camera is positioned adjacent to the one end.

3. The electronic device of claim 1 or 2, wherein the touch input includes a swipe input, a tap input, or a hovering input, and
wherein the at least one processor is configured to:
display, when the movement of the touch input from the first area is detected, a third image on at least a part of a third area of the second display; and
execute, when a movement of the touch input to the third area is detected, the payment service based on the payment means by displaying a payment image on the second display.

4. The electronic device of claim 1, further comprising:
a fingerprint sensor located on a side surface of the first housing or the second housing,
wherein the at least one processor is configured to:
display, when the movement of the touch input from the first area is detected, a third image on at least a part of a third area of the second display located in an area adjacent to the fingerprint sensor; and
execute, when a movement of the touch input to the third area is detected, the payment service based on the payment means using fingerprint authentication.

5. The electronic device of claim 1, wherein the at least one processor is configured to:
display, when the movement of the touch input from the first area is detected, a third image on at least a part of a third area of the second display,
display, when a movement of the touch input to the third area is detected, a user interface (UI) for selecting the payment means on the second display, and
identify the selected payment means based on an input corresponding to the UI for selecting the payment means.

6. The electronic device of claim 5, wherein the at least one processor is configured to:
display a fourth image corresponding to the identified payment means on the second display, and
set, when the fourth image is moved to a fourth area of the second display based on a touch input to the fourth image, the fourth area as a pre-defined area corresponding to the identified payment means.

7. The electronic device of claim 6, wherein the at least one processor is configured to:
detect another touch input for the pre-defined area in the folded position,
display, when a movement of the other touch input for the pre-defined area to the pre-defined area from the pre-defined area is detected, the fourth image on at least a part of the pre-defined area and display the second image on the at least a part of the second area, and
execute, when a movement of the other touch input for the pre-defined area to the second area for the pre-defined area is detected, a payment service based on the identified payment means using the at least one camera.

8. The electronic device of any one of claims 1 to 7, wherein the at least one processor is configured to:
set, when a payment is completed by the payment service, a most recently used payment means for the payment service as a default payment means of the payment service,
detect another touch input for the second area, and
execute, when a movement of the other touch input for the second area to the second area is detected from the second area, a payment service based on the default payment means.

9. The electronic device of any one of claims 1 to 8, wherein the at least one processor is configured to:
set, when the payment is completed by the payment service, the most recently used payment means for the payment service as the default payment means of the payment service,
detect another touch input for the third area, and
execute, when a movement of the other touch input for the third area to the third area is detected from the third area, the payment service based on the default payment means.

10. The electronic device of any one of claims 1 to 9, wherein the at least one processor is further configured to:
acquire, when the movement of the touch input to the second area is detected, an image including payment information using the at least one camera, and
execute the payment service using the acquired image and the payment means.

11. A method of an electronic device, the method comprising:
detecting a touch input to a first area of a second display visible from the outside in a folded position of the electronic device or a movement of the touch input from the first area;
displaying a first image indicating a payment means on at least a part of the first area and displaying a second image on at least a part of a second area of the second display; and
executing, when a movement of the touch input to the second area is detected, a payment service based on the payment means using at least one camera.

12. An electronic device, comprising:
a housing including a first housing part and a second housing part configured to movably engage with the first housing part between a folded position and an unfolded position;
a first flexible display visible from a front side of the housing in the unfolded position;
a second display visible from a rear side of the housing in the unfolded position and located at the second housing part;
at least one camera visible from the rear side of the housing in the unfolded position and located at the second housing part;
memory; and
at least one processor electrically connected to the first flexible display, the second display, the at least one camera, and the memory, wherein the at least one processor is configured to:
detect a touch input for a first area of the second display in the folded position,
display, when a movement of the touch input from the first area is detected, a part of a first image indicating a payment means on at least a part of the first area, and
display entirety of the first image as a movement distance of the touch input within the first area being increased.

13. The electronic device of claim 12, comprising:
wherein the at least one processor is configured to apply a dimming effect to an area, among the second display area, other than the first image in response to an increase of the movement distance within the first area.

14. The electronic device of any one of claims 12 to 13, comprising:
wherein the at least one processor is configured to display the first image by changing a shape or an aligned direction of the first image in response to a change in a movement direction of the touch input from the first area.

15. The electronic device of any one of claims 12 to 14, comprising:
wherein the at least one processor is configured to display the first image by changing a size of the first image from a first size to a second size response to an increase in a movement distance of the touch input from the first area.
